# EUROPEAN PATENT SPECIFICATION

(11) **EP 1 358 242 B1**
(45) Date of publication and mention of the grant of the patent: **15.03.2006**
(21) Application number: 02715490.5
(22) Date of filing: 14.01.2002
(51) Int. Cl.: C08G 18/80, C09D 175/04

(54) **MIXED-BLOCKED POLYISOCYANATES AND USES THEREOF**
GEMISCHT BLOCKIERTE POLYISOCYANATE UND DEREN VERWENDUNG
POLYISOCYANATES MELANGES-SEQUENCES ET UTILISATIONS DE CEUX-CI

(30) Priority: 12.01.2001 GB 0100918; 27.04.2001 GB 0110424
(43) Date of publication of application: 05.11.2003
(73) Proprietor: BAXENDEN CHEMICALS LIMITED, Baxenden, Near Accrington Lancashire BB5 2SL (GB)
(72) Inventor: JONES, Richard Garfield, Baxenden Chemicals Ltd., Nr Accrington, Lancashire BB5 2SL (GB); RIMMER, Ian, Kevin, Baxenden Chemicals Limited, Nr Accrington, Lancashire BB5 2SL (GB); BOLTON, Claire, Louise, Baxenden Chemicals Limited, Nr Accrington, Lancashire BB5 2SL (GB); HARGREAVES, Peter, Baxenden Chemicals Limited, Nr Accrington, Lancashire BB5 2SL (GB)
(74) Representative: Cresswell, Thomas Anthony
(86) International application number: PCT/GB2002/000130
(87) International publication number: WO 2002/055577

(56) References cited:
- WO-A-00/34356
- US-A- 5 510 432
- US-A- 5 596 064
- DOWLING, CONOR ET AL: "Structural characterization of bis(pyrazolyl)hydroborato thallium complexes: monomeric "two-coordinate" thallium derivatives supplemented b [Tl.cntdot..cntdot..cntdot.H-B] interactions" POLYHEDRON (1997), 16(19), 3469-3473 , XP002195614
- IMAI, SADAKO ET AL: "63Cu NMR Study of Copper(I) Carbonyl Complexes with Various Hydrotris(pyrazolyl)borates: Correlation between 63Cu Chemical Shifts and CO Stretching Vibrations" INORG. CHEM. (1998), 37(12), 3066-3070 , XP002195615

## Description

The present invention is concerned with improvements to curing compositions in which curing is effected by cross-linking of polyisocyanates following thermal dissociation of a blocked polyisocyanate. In particular the invention is directed to the use of mixed blocked polyisocyanates which include thermally active blocking groups and 1,3-dicarbonyl blocking groups. Curable coating compositions based on such mixed blocked polyisocyanates have good scratch resistance and offer good intercoat adhesion, as will be explained further below.

Certain such mixed blocked polyisocyanates may suffer a degree of incompatibility with other ingredients commonly used in curable coatings compositions, but this can be avoided by employing hybrid blocked polyisocyanates. In the latter, which form a particular aspect of the present invention, individual polyisocyanate molecules bear at least one thermally active blocking group and at least one 1,3-dicarbonyl blocking group.

The present invention therefore relates to the use of mixed blocked polyisocyanates in a curable composition so as to provide scratch resistance of the cured composition and good intercoat adhesion when a further coating layer is applied.

The present invention also relates to novel hybrid blocked polyisocyanates, methods for making them, compositions containing them and methods of depositing the coating compositions on a substrate, as well as to their use in curable compositions.

Blocked polyisocyanates are commonly used in compositions which also contain active hydrogen containing compounds e.g. amines and alcohols. These compositions, for instance when deposited onto an article to be coated, may be hardened by heating, often referred to as stoving. During stoving the blocked polyisocyanates dissociate so that the isocyanate groups become available to react with the active hydrogen containing compounds leading to crosslinking and hardening of the coating.

It is known in the art to block polyisocyanates with a variety of blocking agents, such as phenols and also pyrazoles such as 3,5-dimethylpyrazole (DMP). The blocking agent is intended to prevent the isocyanate groups from reacting with compounds which contain active hydrogen atoms (e.g. hardeners or curing agents) unless heated. It is therefore possible to mix blocked polyisocyanates at room temperature with active hydrogen compounds and to handle and store the mixtures for a certain length of time. To effect a full cure, the mixtures are heated to a temperature at which the blocked polyisocyanates react with the active hydrogen compounds. Many types of compounds have already been disclosed as suitable reactive partners, including polyalcohols, polyamines, polythiols, polycarboxylic acids, tri- or diamides, urethanes or water.

The use of malonate esters as blocking agents is known. It is commonly postulated that malonate ester blocked polyisocyanates crosslink by a transesterification reaction to form the final cured coatings. This is in contrast to the release of the reformed blocking agents that occurs on unblocking polyisocyanates bearing thermally active blocking groups. However, isocyanates blocked with such esters often show incompatibilities when mixed with polyols and such mixtures often undergo gellation at room temperature or about 23°C. This is unfortunate as polyols are commonly present in compositions containing blocked polyisocyanates, usually as hardeners. It is thought that the incompatibility with polyols is due to some transesterification taking place at room temperature and causing phase separation or partial curing. Although mixing the blocked isocyanates with a hydroxyl functional solvent such as a monofunctional alcohol can reduce the incompatibility it cannot completely remove it.

Malonic ester blocked polyisocyanates can also suffer from stability problems which can lead, for example, to solidification. For example, when hexamethylene diisocyanate isocyanurate (HDI trimer) is blocked with diethyl malonate the blocked isocyanate has a tendency to crystallise or solidify. In contrast, a stable blocked isocyanate remains liquid (at 23°C).

Surprisingly it has been found that if a polyisocyanate is partially blocked with a 1,3-dicarbonyl compound selected from diethyl malonate, dimethyl malonate, Meldrum's acid and ethyl acetoacetate, and is also blocked with a thermally active blocking agent which is a pyrazole based compound, then the incompatibilities shown by polyisocyanates blocked only by a malonic ester are eliminated.

An advantage of the present invention lies in the fact that such hybrid blocked polyisocyanates contain molecules each of which are blocked with at least one 1,3-dicarbonyl compound and with at least one thermally active blocking group. [Often they will also contain molecules blocked only with one of the blocking grooups and other molecules blocked only with another of the blocking groups.] Thus, a physical blend of (i) a fully DMP blocked HDI trimer with (ii) a fully diethyl malonate (DEM) blocked HDI trimer solidifies at 23°C, whereas the equivalent hybrid blocked polyisocyanate remains clear and a single phase.

Blocked polyisocyanates are often used to form coating layers, for example in coil coatings, powder coatings and in the automotive industry, where they are particularly useful in the formation of clear coatings as the final coating and are therefore formulated so as to give good protectiom against environmental agents.

These clear coatings typically suffer from scratching during the life of the vehicle. Scratches are aesthetically undesirable and can lead to corrosion of the substrate if this becomes exposed by the scratch or by gradual removal of lower coating layers following a scratch in the outermost layer. It is therefore an object of the present invention to provide coatings which have a good resistance to scratching.

Typically, in for instance automotive OEM coatings, the layers making up the coating are a primer, then a basecoat colour layer and finally the clear coating. These are applied in order to a substrate.

When there is a fault in the coating or in one of the underlayers such as the basecoat colour layer or primer, which may occur during the initial coating procedure in the factory or may occur later, for example, by scratching, further coating layers are applied. This leads to the application of, for example, basecoat colour layer over the existing cured clearcoat formed from the blocked polyisocyanate. Due to the cured nature of the clear coating, it is difficult to adhere a further coating thus causing further defects. This poor adhesion between the previous surface and the new overcoating is known in the industry as a lack of intercoat adhesion.

DMP in particular has been widely used as a blocking agent in polyisocyanate based products such as automotive clearcoats, where its combination of stability and ready unblocking, resistance to yellowing on overbake and acid etch resistance have been much appreciated in this very demanding role. However, a greater level of scratch resistance would be advantageous to the automobile industry, in particular. Similarly, improved intercoat adhesion, especially where repair is likely to be required, is an objective in connection with pyrazole blocked polyisocyanate coating compositions.

Surprisingly it has been found that if a mixed blocked polyisocyanate containing 1,3-dicarbonyl blocking groups derived from diethyl malonate, dimethyl malonate, Meldrum's acid and/or ethyl acetoacetate, and thermally active pyrazole blocking groups is used to form a coating, such as a clear coating, then the scratch resistance of the coating is improved. In addition the intercoat adhesion of a subsequently applied coating, such as a basecoat colour layer, is much improved compared to the intercoat adhesion to, for example, a coating formed from a DMP blocked polyisocyanate. In fact the intercoat adhesion can be as high as for the original application of the clear coating to the basecoat colour layer. This is achieved without causing the stability problems associated with malonate ester blocking agents.

Accordingly, the present invention provides the use of a mixed blocked polyisocyanate product in a curable composition, wherein the mixed blocked polyisocyanate product is obtainable by blocking one or more polyisocyanates with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99. The mixed blocked polyisocyanate may be any blocked polyisocyanate which has the required mixture of blocking groups. The curable composition is suitably a coating composition. The mixed blocked polyisocyanate product may be in solid or liquid form (called "100% solids" in the art) depending on the nature of the components of the mixed, blocked polyisocyanate, or in the form of a dispersion in water or a liquid carrier or a solution in an organic solvent or water.

In one embodiment the mixed blocked polyisocyanate product is a hybrid blocked polyisocyanate product in which at least a proportion of the molecules are blocked with both a 1,3-dicarbonyl blocking group derived from diethyl malonate, dimethyl malonate, Meldrum's acid or ethyl acetoacetate, and a thermally active blocking group derived from a pyrazole, such that the molar ratio of 1,3-dicarbonyl blocking groups to thermally active blocking groups in the hybrid blocked polyisocyanate product is in the range of from 4:1 to 1:99.

The hybrid blocked polyisocyanate product has a mixed population of fully blocked polyisocyanate molecules. Typically, some molecules are fully blocked with one of the blocking agents (eg. the thermally active blocking agent) and other molecules are fully blocked with another blocking agent (eg. a 1,3-dicarbonyl blocking agent) . Generally it is preferred to use amounts of at least two blocking agents such that approximately 10 mol% or more of the polyisocyanate mollecules are blocked by at least one 1,3-dicarbonyl blocking group and by at least one thermally active blocking group, preferably at least 20%, for instance at least 30%, 40%, 50%, 60%, or 70%,

In a further embodiment the mixed blocked polyisocyanate product is a blend comprising a polyisocyanate blocked with at least one 1,3-dicarbonyl blocking group derived from diethyl malonate, dimethyl malonate, Meldrum's acid and/or ethyl acetoacetate, and the same or a different polyisocyanate blocked with at least one thermally active blocking group derived from a pyrazole, wherein the molar ratio of 1,3-dicarbonyl blocking groups to thermally active blocking groups in the blocked polyisocyanate product blend is in the range of from 4:1 to 1:99. The mixed blocked polyisocyanate can contain more than one polyisocyanate blocked with either type of blocking group.

In another embodiment the mixed blocked polyisocyanate product is a blend of two or more blocked polyisocyanates, one or more of which is a hybrid blocked polyisocyanate, wherein the blend has a molar ratio of 1,3-dicarbonyl blocking groups to thermally active blocking groups in the range of from 4:1 to 1:99. The hybrid blocked polyisocyanates may each independently have a molar ratio of blocking groups falling outside this range as long as the blend has a molar ratio of 1,3-dicarbonyl blocking groups to thermally active blocking groups of from 4:1 to 1:99.

In a particular embodiment the mixed blocked polyisocyanate product is a blend comprising (a) a hybrid blocked polyisocyanate and at least one of (b) a polyisocyanate blocked with at least one 1,3-dicarbonyl blocking group derived from diethyl malonate, dimethyl malonate, Meldrum's acid and/or ethyl acetoacetate, and (c) a polyisocyanate blocked with at least one thermally active blocking group derived from a pyrazole wherein the molar ratio of 1,3-dicarbonyl blocking groups to thermally active blocking groups in the blend is in the range of from 4:1 to 1:99. The hybrid blocked polyisocyanate optionally has a molar ratio of 1,3-dicarbonyl blocking groups to thermally active blocking groups in the range of from 4:1 to 1:99. However, hybrid blocked polyisocyanates with a molar ratio of 1,3-dicarbonyl blocking groups to thermally active blocking groups outside the range of 4:1 to 1:99 can be used as long as the mixed blocked polyisocyanate product has a molar ratio of 1,3-dicarbonyl blocking groups to thermally active blocking groups in the range of from 4:1 to 1:99.

The polyisocyanate may be any organic polyisocyanate suitable for crosslinking compounds containing active hydrogen e.g. aliphatic or cycloaliphatic, aromatic, heterocyclic, and mixed aliphatic aromatic polyisocyanates containing 2, 3 or more isocyanate groups, many of which are well known in the art. Substitution of the polyisocyanate e.g. by alkoxy groups is possible.

The polyisocyanate compound may be, for example, but is not limited to ethylene diisocyanate, propylene diisocyanate, tetramethylene diisocyanate, hexamethylene diisocyanate (HDI), decamethylene diisocyanate, dodecamethylene diisocyanate, 2,4,4-trimethylhexamethylene-1,6 diisocyanate, phenylene diisocyanate, 2,4-diisocyanatotoluene, 2,6-diisocyanatotoluene, naphthylene diisocyanate, dianisidine diisocyanate, 4,4'-methylene-bis(phenyl isocyanate), 2,4'-methylene-bis(phenyl isocyanate), 4,4'-ethylene-bis(phenyl isocyanate), ω,ω'-diisocyanato-1,3-dimethyl benzene, cyclohexane diisocyanate, ω,ω'-diisocyanato-1,4-dimethyl cyclohexane, ω,ω'-diisocyanato-1,4-dimethyl benzene, ω,ω'-diisocyanato-1,3-dimethylcyclohexane, 1-methyl-2,4-diisocyanato cyclohexane, 4,4'-methylene-bis (cyclohexyl isocyanate), 3-isocyanato-methyl-3,5,5-trimethyl cyclohexyl isocyanate (isophorone diisocyanate, IPDI), dimer acid-diisocyanate, ω,ω'-diisocyanato-diethyl benzene, ω,ω'-diisocyanatodimethyl toluene, ω,ω'-diisocyanato-diethyl toluene, fumaric acid-bis (2-isocyanato ethyl) ester to triphenylmethane-triisocyanate, 1,4-bis-(2-isocyanato-prop-2yl) benzene, 1,3-bis-(2-isocyanate prop-2yl) benzene. In one embodiment of the invention, the polyisocyanate is preferably free from isocyanate groups directly attached to aromatic nuclei. In another embodiment, the polyisocyanate may contain isocyanate groups directly attached to aromatic nuclei.

The polyisocyanate can also be a polyisocyanate obtained by reaction of an excess amount of the isocyanate with a) water, b) a lower molecular weight polyol, (e.g. m.w.≤300) or c) a medium molecular weight polyol, e.g. a polyol of greater than 300 and less than 8000 m.w., e.g. sucrose, or by the reaction of the isocyanate with itself to give an isocyanurate.

The lower molecular weight polyol comprises, for example, ethyleneglycol; propyleneglycol, 1,3-butylene glycol, neopentyl glycol, 2,2,4-trimethyl-1,3-pentane diol, hexamethylene glycol, cyclohexane dimethanol, hydrogenated bisphenol-A, trimethylol propane, trimethylol ethane, 1,2,6-hexane triol, glycerine, sorbitol or pentaerythritol.

The polyisocyanate obtained by the above reaction may have a biuret structure, or an allophanate group.

Also useful in the invention are the trimers of di- or higher polyisocyanates, i.e. materials containing an isocyanurate group.

Preferred polyisocyanates include HDI trimer, HDI biuret and IPDI trimer.

Polyisocyanate prepolymers which contain on average more than one isocyanate group per molecule are also suitable for use in the present invention. The prepolymers are obtained by prereacting a molar excess of one of the polyisocyanates referred to above with an organic material which contains at least two active hydrogen atoms per molecule, for example in the form of hydroxyl groups, as in polyalkylene glycols.

The 1,3-dicarbonyl blocking group is derived from a 1,3-dicarbonyl compound, that is a compound containing the moiety shown in formula (I) 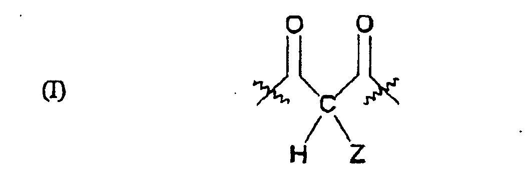 wherein the group Z is hydrogen, methyl or ethyl.

As used herein, a 1,3 dicarbonyl compound is chosen from diethyl malonate, dimethyl malonate, Meldrum's acid and ethyl acetoacetate, most preferably diethyl malonate.

The thermally active blocking group is any group which provides a blocked polyisocyanate which remains stable at ambient temperatures, such as 20 to 25 °C, for instance about 23 °C, but which unblocks on heating, for example on heating to a temperature above 80°C preferably up to about 130°C, for instance up to 120, 115 or 110°C under practical conditions such as in coating compositions in the presence of an active hydrogen compound. The unblocking temperature may also be determined under experimental conditions in the absence of active hydrogen compounds by i.r. spectroscopic techniques, and under such conditions is suitably above 60°C, for instance above 70 or 80°C and may be up to 110°C, more preferably up to 105 or 100°C. Thus, a thermally active blocking group will release isocyanates on heating even if there is no curative agent present

The thermally active blocking group is derived from a thermally active agent chosen from pyrazoles such as 3,5-dimethylpyrazole, 3,5-diethylpyrazole, 3-methylpyrazole, pyrazole and 3-*iso*-butyl-5-*tert*-butyl-pyrazole, 3-*iso-*butyl-5-methylpyrazole and 3,5-di-*tert*-butyl-pyrazole.

For the avoidance of doubt it is to be noted that the term "thermally active blocking group" as used herein is not intended to encompass groups which, on heating to cause unblocking, leave a residual group bonded to the isocyanate group. Blocking groups comprising active methylene groups, such as the acetoacetonates (eg. ethyl acetoacetonate) are thus not considered to be and are excluded from "thermally active blocking groups".

The pyrazoles may be chosen from the pyrazoles of Formula (II) 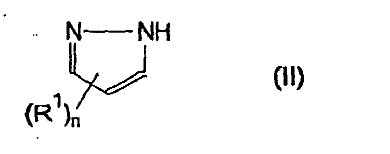
where n is 0, 1, 2 or 3, the groups R¹ are each straight or branched alkyl, alkenyl, aralkyl, N-substituted carbamyl, phenyl or 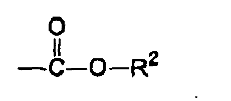
where R² is a C₁-C₄ alkyl group
and when n is 2 or 3 the groups R¹ may be the same or different.

Preferably n=2.

Preferably the pyrazole group is substituted in the 3 and 5 positions.

More preferably both R¹ groups are alkyl groups of 1 to 6 carbon atoms such as methyl or ethyl, or at least one R¹ is a branched alkyl group of 3 to 6 carbon atoms.

Suitable branched alkyl groups include iso-propyl, iso-butyl, sec-butyl and tert-butyl. Particularly preferred branched alkyl pyrazoles are 3-methyl-5-*iso*-propyl pyrazole, 3-*iso*-butyl-5-methyl pyrazole, 3-*sec*-butyl-5-methyl pyrazole, 3-*tert*-butyl-5-methyl pyrazole, 3-ethyl-5-*iso*-propyl-pyrazole, *3-iso* butyl-5-ethyl pyrazole, 3*-sec-*butyl-5-ethyl pyrazole, 3-*tert*-butyl-5-ethyl pyrazole, 3-*iso*-propyl-5-*n*-propyl pyrazole, 3-*iso*-butyl-5-*n*-propyl pyrazole, 3-*sec*-butyl-5-*n*-propyl pyrazole, *3-tert-*butyl-5-*n*-propyl pyrazole, 3-*n*-butyl-5-iso-propyl pyrazole, 3-*iso*-butyl-5-*n*-butyl pyrazole, 3-*n*-butyl-5-*sec* butyl pyrazole, 3-*n*-butyl-5-*tert*-butyl pyrazole, 3,5-di-*iso-*propyl pyrazole, 3-*iso*-butyl-5-*iso*-propyl pyrazole, 3-*sec*-butyl-5-*iso*-propyl pyrazole, 3-*tert*-butyl-5-*iso*-propyl pyrazole, 3,5-di-*iso*-butyl pyrazole, 3-*iso*-butyl-5-*sec*-butyl pyrazole, *3-iso-*butyl*-5-tert* butyl pyrazole, 3,5-di-*sec*-butyl pyrazole, 3-*sec*-butyl-5-*tert-*butyl pyrazole and 3,5-di-*tert*-butyl pyrazole.

Substituted pyrazoles, including branched alkyl pyrazoles may be produced by conventional methods involving formation of a diketone from a methyl ketone and an ester and reacting the diketone with hydrazine. Approximately 1 mole af base is required to effect the reaction between 1 mole of the methyl ketone and 1 mole of the ester. This is described in more detail below.

In one preferred embodiment the thermally active agent is a pyrazole compound, more preferably 3,5-dimethylpyrazole or 3,5-di-*tert*-butyl pyrazole and most preferably 3,5-dimethylpyrazole.

In one embodiment the thermally active agent is a branched alkyl pyrazole. Of these 3,5-di-*tert*-butyl pyrazole is especially preferred for its particularly low unblocking temperature, and for its stability and capacity to reduce unblocking temperatures in general when used in a mixed blocked polyisocyanate.

In one embodiment of the present invention, the mixed blocked polyisocyanate has a 1,3-dicarbonyl blocking group derived from diethyl malonate, dimethyl malonate, Meldrum's acid or ethyl acetoacetate and a thermally active blocking group derived from a pyrazole. In a preferred embodiment of the present invention, the mixed blocked polyisocyanate product is obtainable by blocking a polyisocyanate with diethyl malonate or dimethyl malonate and 3,5-dimethylpyrazole or 3,5-di-*tert*-butyl pyrazole. In a particularly preferred embodiment, the mixed blocked polyisocyanate product is obtainable by blocking with at least diethyl malonate and 3,5-dimethylpyrazole. In a particularly preferred embodiment, the mixed blocked polyisocyanate is obtainable by blocking with diethyl malonate and 3,5-dimethylpyrazole only.

The molar ratio of 1,3-dicarbonyl blocking groups to thermally active blocking groups in the mixed blocked polyisocyanate is from 4:1 to 1:99, prefereably 4:1 to 2:98, preferably 3:1 to 5:95, more preferably 2:1 to 1:9, and most preferably 1:1. A particularly preferred ratio for diethyl malonate and 3,5-dimethylpyraxole is 1:1.

In a preferred embodiment, the mixed blocked polyisocyanate is a hybrid blocked polyisocyanate obtainable by blocking with diethyl malonate or dimethyl malonate and 3,5-dimethylpyrazole or 3,5-di-*tert*-butyl pyrazole.

In another preferred embodiment, the mixed blocked polyisocyanate is a blend of a blocked polyisocyanate obtainable by blocking with diethyl malonate or dimethyl malonate and a blocked polyisocyanate obtainable by blocking with 3,5-dimethylpyrazole or 3,5-di-*tert*-butyl pyrazole. More preferably the blend contains a diethyl malonate blocked polyisocyanate and a 3,5-dimethylpyrazole blocked polyisocyanate.

A hybrid blocked polyisocyanate is typically produced by a process comprising reacting one or more polyisocyanates with at least one 1,3-dicarbonyl compound and at least one thermally active agent. This is described in detail below.

For the production of blends, two or more blocked polyisocyanates are mixed together. Polyisocyanates blocked with groups derived from a 1,3-dicarbonyl compound or with groups derived from a thermally active compound can be produced by methods known in the art.

A blend of polyisocyanates is generally obtained by mixing the blocked polyisocyanate(s) and/or hybrid blocked polyisocyanates. Mixing is continued until a homogeneous mixture is formed.

Typically the polyisocyanate and blocking agent are heated in order for the blocking reaction to occur. The reaction mixture is heated to a suitable temperature for the reaction to occur. Generally, the reaction mixture is heated to above 50°C, preferably above 60°C. However, where appropriate the initial heating of the reaction mixture may be to a lower temperature. For example, HDI trimer will react with 3,5-dimethylpyrazole when heated initially to 30 to 40°C. After initiating the reaction, cooling may be required in order to control the exotherm generated by, for instance, pyrazole blocking agents.

The present invention also provides a process of overcoating a cured coating formed from a composition comprising a mixed blocked polyisocyanate product obtainable by blocking a polyisocyanate with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99, and an active hydrogen containing compound which process comprises applying a further layer over the cured coating and curing. This process may be used, for example, to repair an article which has become damaged during use or a defect that has been identified during the initial production process of a coated article. In a particular embodiment the further layer is a basecoat colour layer. The process may further comprise applying one or more additional coating layers such as a clearcoat comprising a mixed blocked polyisocyanate.

The present invention also provides a coating composition comprising an active hydrogen containing compound and a mixed blocked polyisocyanate product obtainable by blocking a polyisocyanate with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is from 4:1 to 1:99. In one embodiment the mixed blocked polyisocyanate product is blocked with pyrazoles as the thermally active blocking agent(s) such that at least 70% of the blocking groups are derived from pyrazoles. In a further embodiment the mixed blocked polyisocyanate product has from 1 to 20%, preferably from 1 to 10% of the blocking groups being 1,3-dicarbonyl blocking groups, preferably diethyl malonate.

The present invention provides an industrial process which comprises:
i) coating articles with a final coating of a composition comprising a mixed blocked polyisocyanate product obtainable by blocking a polyisocyanate with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99, and an active hydrogen containing compound,
ii) curing the coating,
iii) inspecting the articles for defects, and
iv) recoating defective articles totally or in part. Preferably the recoating step involves coating with one or more layers and then overcoating with a coating composition comprising an active hydrogen containing compound and a mixed blocked polyisocyanate product as described above, and curing.

The present invention further provides a hybrid blocked polyisocyanate having at least one 1,3-dicarbonyl blocking group derived from diethyl malonate, dimethyl malonate, Meldrum's acid and/or ethyl acetoacetate, and at least one thermally active blocking group derived from a pyrazole, such that the molar ratio of 1,3-dicarbonyl blocking groups to thermally active blocking groups in the hybrid blocked polyisocyanate is in the range of from 4:1 to 1:9. In one embodiment the molar ratio of 1,3-dicarbonyl blocking groups to thermally active blocking groups is about 1:9.

In a particularly preferred embodiment the hybrid blocked polyisocyanate consists of polyisocyanate fully blocked with only one 1,3-dicarbonyl blocking agent and with only one thermally active blocking agent.

The hybrid blocked polyisocyanate contains a sufficient amount of the thermally active blocking groups to remove the incompatibilities shown when using only 1,3-dicarbonyl blocking groups (but at least 20 mol% based on total blocking groups present) up to 90 mol% of the blocking groups being the thermally active blocking group. In a preferred embodiment, the hybrid blocked polyisocyanate from 20 to 65 mol% of the blocking groups are thermally active blocking groups.

When the polyisocyanate is reacted with a first blocking agent, some of the polyisocyanate molecules are blocked completely with that blocking agent, some molecules (preferably the majority) are partially blocked and some remain unblocked. When the partially blocked polyisocyanate is reacted with a second (and optionally further) blocking agent, all the unblocked functional groups become blocked. The result is a mixed population of fully blocked polyisocyanate molecules. Generally it is preferred to use amounts of two blocking agents such that approximately 10 mol% or more of the polyisocyanate molecules are blocked by at least one 1,3-dicarbonyl blocking group and by at least one thermally active blocking group, preferably at least 20%, for instance at least 30%, 40%, 50%, 60%, or 70%.

The polyisocyanate may be any organic polyisocyanate, including biurets, allophanates, trimers (isocyanurates) and prepolymers, described above as being suitable for crosslinking compounds containing active hydrogen. Preferences expressed above apply equally to the hybrid blocked polyisocyanates. HDI trimer is particularly preferred.

The 1,3-dicarbonyl blocking group is derived from a 1,3-dicarbonyl compound described above. Preferences expressed above apply equally to the hybrid blocked polyisocyanates. HDI trimer is particularly preferred.

The thermally active blocking group is any pyrazole group which remains stable at ambient temperatures but which unblocks on heating, for example on heating to a temperature above 80°C under practical conditions (see above). The thermally active blocking group is derived from a thermally active agent as described above. Preferences expressed above apply equally to the hybrid blocked polyisocyanates. HDI trimer is particularly preferred.

The hybrid blocked polyisocyanate has a 1,3-dicarbonyl blocking group derived from diethyl malonate, dimethyl malonate, Meldrum's acid or ethyl acetoacetate and a thermally active blocking group derived from a pyrazole. In a preferred embodiment of the present invention, the hybrid blocked polyisocyanate has a 1,3-dicarbonyl blocking group derived from diethyl malonate or dimethyl malonate and a thermally active blocking group derived from 3,5-dimethylpyrazole or 3,5-di-*tert-*butyl pyrazole. In a particularly preferred embodiment, the hybrid blocked polyisocyanate has a 1,3-dicarbonyl blocking group derived from diethyl malonate and a thermally active blocking group derived from 3,5-dimethylpyrazole. In a particularly preferred embodiment, the hybrid blocked polyisocyanate has one 1,3-dicarbonyl blocking group which is derived from diethyl malonate and one thermally active blocking group which is derived from 3,5-dimethylpyrazole and no other blocking groups are present.

The molar ratio of 1,3-dicarbonyl blocking groups to thermally active blocking groups in the hybrid blocked polyisocyanate is as described above, for instance from 4:1 to 1:9, preferably 3:1 to 1:8, more preferably 2:1 to 1:6, more preferably 2:1 to 1:4, more preferably 2:1 to 1:2 and most preferably 1:1. A particularly preferred ratio for diethyl malonate and 3,5-dimethyl pyrazole is 1:1.

The present invention also provides a process for producing a hybrid blocked polyisocyanate of the present invention, which process comprises reacting one or more polyisocyanates with at least one 1,3-dicarbonyl compound selected from diethyl malonate, dimethyl malonate, Meldrum's acid and ethyl acetoacetate, and at least one thermally active agent selected from pyrazoles wherein the amounts of 1,3-dicarbonyl compound and thermally active agent are such that the molar ratio of 1,3-dicarbonyl blocking groups to thermally active blocking groups in the hybrid blocked polyisocyanate is in the range of from 4:1 to 1:99, preferably 4:1 to 1:9. The polyisocyanate(s) are reacted with the blocking agents simultaneously or in any order.

When only two blocking agents are used, the polyisocyanate may be reacted with both together, with the thermally active blocking agent first-followed by reaction with the 1,3-dicarbonyl compound or with the 1,3-dicarbonyl compound first followed by reaction with the thermally active blocking agent Preferably the 1,3-dicarbonyl compound is used first.

When more than two blocking agents are used, the polyisocyanate may be reacted with the blocking agents in any order or combination.

In a particular embodiment, the present invention also provides a process for producing a hybrid blocked polyisocyanate which process comprises reacting one or more polyisocyanates with a mixture of two or more blocking agents, wherein at least one of the blocking agents is a 1,3-dicarbonyl compound selected from diethyl malonate, dimethyl malonate, Meldrum's acid and ethyl acetoacetate, and at least one of the blocking agents is a thermally active agent selected from pyrazoles and the molar ratio of 1,3-dicarbonyl blocking agents to thermally active blocking agents in the hybrid blocked polyisocyanate is in the range of from 4:1 to 1:99, preferably 4: 1 to 1:19, more preferably 4:1 to 1:9.

Typically the polyisocyanate and blocking agent are heated in order for the blocking reaction to occur. The reaction mixture is heated to a suitable temperature for the reaction to occur. Generally, the reaction mixture is heated to above 50°C, preferably above 60°C. However, where appropriate the initial heating of the reaction mixture may be to a lower temperature. For example, HDI trimer will react with 3,5-dimethylpyrazole when heated initially to 30-40°C. After initiating the reaction, cooling may be required in order to control the exotherm generated by, for instance, pyrazole blocking agents.

The hybrid blocked polyisocyanates of the present invention are used in clear coatings, paints, elastomers, adhesives, molding compositions and surface treatments, for instance for fibres or fabrics. The products may, depending on the individual components, be in solid or liquid form (even in the absence of solvents, called "100% solids" in the art) or in the form of a dispersion in water or a liquid carrier or a solution in an organic solvent or water. Hybrid blocked polyisocyanates which react with active hydrogen containing compounds can be cured by chain extension or crosslinking and are also used in crosslinking acrylic resins for automotive priming and finishing, formulating one-pack elastomers and surface coatings which contain the hybrid blocked isocyanate and as a chain extender in a single storage stable package which, when cast, can be cured by application of temperatures above the unblocking temperature. The hybrid blocked polyisocyanates of the invention are particularly useful in polyurethane coating compositions.

The present invention also provides a composition comprising a hybrid blocked polyisocyanate of the invention and at least one monofunctional or bifunctional or poly functional compound containing active hydrogen. The composition may further comprise any further components known in the area of application of the composition. For example, a paint composition comprising a hybrid blocked polyisocyanate of the present invention may further comprise a pigment. The paint may be applied using any process known in the art, including electrophoretic deposition.

In the context of the present invention it should be noted that unblocking of thermally active blocking agents is the process that takes place when a blocked polyisocyanate containing such a blocking agent is heated to the point at which it dissociates and the isocyanate becomes free. The unblocking reaction is separate from the curing reaction. In the unblocking reaction free isocyanate groups are reformed which are then able to react with other components of the curing composition. The unblocking reaction is of course a reversible process (the reverse reaction is exploited to block the isocyanate) and therefore subject to control in various manners. For example, increased temperature favours the unblocking reaction, hence blocked polyisocyanates are thermally labile. The unblocking reaction is also controlled by the concentrations of the various reagents. At the start of an unblocking reaction when all isocyanate groups are blocked, the unblocking reaction is, of course, predominant. If the blocking agent is removed (for instance a volatile blocking agent may evaporate from a coating), the reaction will be driven towards the formation of the unblocked isocyanate. Similarly, if the unblocked isocyanate is removed (usually it is, by reaction with the other components of the curing composition) again the reaction is driven towards formation of the unblocked material. However, if there is an excess of blocking agent, the reverse reaction may be accentuated. These factors all contribute to the overall rate of the unblocking reaction.

In contrast the curing reaction is essentially irreversible. Free isocyanate groups react rapidly with active hydrogen containing components of curing compositions and generate the desired polyurethane polymers that form the basis of a crosslinked product. The rate of the curing reaction will depend upon the nature of the polyisocyanate, the nature of the active hydrogen containing components, their respective concentrations, the temperature and the freedom of individual molecules to move within the composition as the curing reaction approaches completion, and as the medium becomes more viscous. The rate of the curing reaction may be increased by catalysis. It may also be adversely affected by the blocking reaction again reducing the amount of free isocyanate in the case (as with DMP) where there is a relatively non-volatile blocking agent present in increasing excess as, towards the end of the curing reaction, the amount of free isocyanate diminishes towards zero.

There is therefore a difference between (a) the temperature at which unblocking occurs at a practicable rate for curing the composition and (b) the rate at which the curing reaction itself proceeds. Normally the curing reaction is fast and curing is therefore controlled by unblocking temperature.

In contrast, the 1,3-dicarbonyl blocking groups are believed to react via a transesterification reaction (Wicks, Zeno W., *et al.,* Organic Coatings: Science and Technology, 2^{nd} Ed'n, J. Wiley & Sons, 1999, ISBN 0-471-24507-0, page 200). In the reaction the blocking group is attacked by a hydroxyl functional compound, which crosslinks the hydroxy functional compounds, and the alcohol by-product leaves.

In practice coatings compositions based on the mixed and hybrid blocked polyisocyanates of the invention may be cured at any temperature above the unblocking temperature provided that they are suitably formulated, which is a matter blocking agents in order to achieve more rapid cure. By way of examples, 3,5-DMP blocked polyisocyanates show a detectable NCO peak in the i.r. spectrum at 95°C whereas in a practical situation typical curing conditions, in the presence of a polyol as active hydrogen compound and a suitable amount of catalyst, would be about 120°C for approximately 45 minutes or about 140°C for 30 minutes.

The present invention can avoid the incompatibility problems sometimes shown by known polyisocyanates. Compatibility of two or more substances is assessed by examining whether the substances when mixed form a stable homogeneous mixture; substances that do not are incompatible.

On unblocking/curing the isocyanate groups react to form a polymer. The polymers formed from the polyisocyanates of the present invention comprise units derived from transesterification adjacent to urethane units. Such polymers comprise as a repeating unit the moiety of Formula (III) 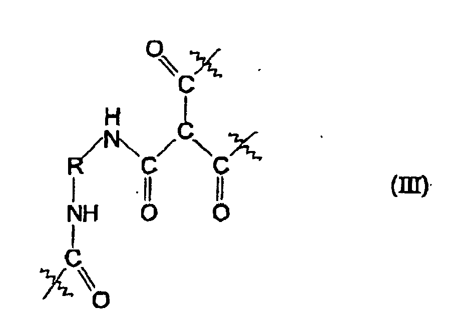 wherein the moiety 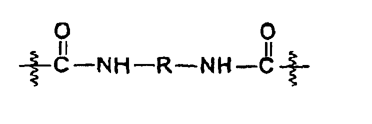 is derived from a di- or higher isocyanate, such as those mentioned above.

The present invention further provides cured coatings comprising a polymer comprising as repeating unit the moiety of Formula (ll) as defined above, the coatings being those obtainable by curing a coating composition as defined above. Where the thermally active pyrazole blocking groups generate, on thermal unblocking, a relatively non-volatile blocking agent, such cured coatings will comprise, in addition to the polymer comprising repeating units of Formula (II), freed pyrazole blocking agent. The invention further provides a process comprising curing a coatings composition as defined above by heating to unblock the polyisocyanate and causing a cross-linking reaction. The invention also provides a coating obtained by such a process, the coating comprising a polymer comprising as repeating unit a moiety of Formula (II) as defined above and free pyrazole blocking agent. Most preferably the pyrazole is 3,5-di-methyl pyrazole, *3-iso-*butyl*-*5*-tert*-butyl pyrazole or 3-*iso*-butyl-5-methyl pyrazole.

Following this work the applicant has also identified a number of pyrazole blocking agents which are particularly suitable for use in forming hybrid blocked polyisocyanates but may also be useful alone. These are the branched alkyl pyrazoles of Formula (IV) 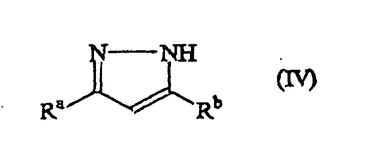
wherein R^{a} is alkyl of 1 to 6 carbon atoms and R^{b} is a branched alkyl of 3 to 6 carbon atoms. Preferably R^{a} is methyl, ethyl, n-propyl, n-butyl or branched alkyl of 3 to 6 carbon atoms. When R^{a} and R^{b} are both branched alkyl they may be the same or different.

Suitable branched alkyl groups include iso-propyl iso-butyl, sec-butyl and tert-butyl. The present invention provides the following particularly preferred branched alkyl pyrazoles
3-methyl-5-*iso*-propyl pyrazole,
3-*iso*-butyl-5-methyl pyrazole,
3-*sec*-butyl-5-methyl pyrazole,
3-ethyl-5-*iso*-propyl pyrazole,
3-*iso*-butyl-5-ethyl pyrazole,
3-*sec*-butyl-5-ethyl pyrazole,
3-*tert*-butyl-5-ethyl pyrazole,
3-*iso*-propyl-5-*n* prapyl pyrazole,
3-*iso*-butyl-5-*n*-propyl pyrazole,
3-*sec*-butyl-5-*n*-propyl pyrazole,
3*-tert* butyl-5-*n*-propyl pyrazole,
3-*n*-butyl-5-*iso*-propyl pyrazole,
3-*iso*-butyl-5-*n*-butyl pyrazole,
3-*n*-butyl-5-*sec*-butyl pyrazole,
3-*n*-butyl-5-*tert* butyl pyrazole,
3,5-di-*iso*-propyl pyrazole,
3-*iso*-butyl-5-*iso* propyl pyrazole,
3-*sec*-butyl-5-*iso*-propyl pyrazole,
3,5-di-*iso*-butyl pyrazole,
3-*iso*-butyl-5-*sec*-butyl pyrazole,
3-*iso*-butyl-5-*tert*-butyl pyrazole,
3,5-di-*sec*-butyl pyrazole and
3-*sec-*butyl-5-*tert*-butyl pyrazole.
3-*tert*-butyl-5-methyl pyrazole, 3-*tert*-butyl-5-*iso*-propyl pyrazole and 3,5*-*di*-tert-*butyl pyrazole may also be used.

Of these 3-*iso*-butyl-5-*tert*-butyl pyrazole, 5-*iso*-butyl-3-methyl pyrazole and 3,5-di-*tert*-butyl-pyrazole are preferred and 3,5-di-*tert*-butyl-pyrazole is especially preferred for its particularly low unblocking temperature when used alone, and for its stability and capacity to reduce unblocking temperatures in general when used in a hybrid blocked poiyisocyanate as described above.

Such branched alkyl pyrazoles may be produced by conventional methods involving formation of a diketone from a methyl ketone and an ester and reacting the diketone with hydrazine. Approximately 1 mole of base is required to effect the reaction between 1 mole of the methyl ketone and 1 mole of the ester. For synthesising asymmetrically substituted pyrazoles, one of the precursors furnishes group R^{a} and the other furnishes the group R^{b}. Thus: 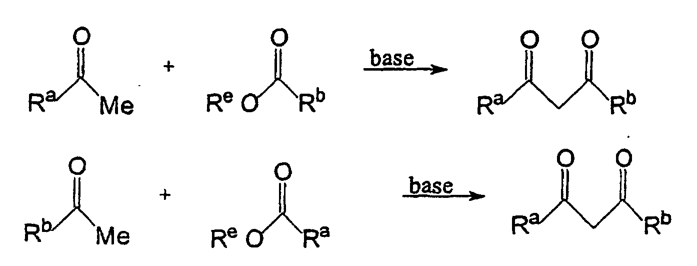 or and then 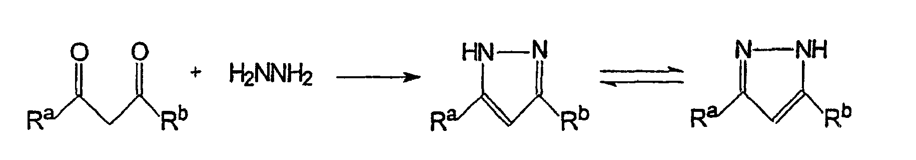 when R^{a} and R^{b} are as defined above and R^{e}-O- is an ester-forming group, R^{e} preferably being an alkyl group such as methyl.

These reactions are very well known and the starting materials readily available commercially or easily produced by known methods.

A further embodiment of the present invention is a blocked polyisocyanate where the blocking agent is a branched alkyl pyrazole as described above, preferably 3,5-di-*tert*-butyl pyrazole. A branched alkyl pyrazole blocked polyisocyanate is produced by heating the branched alkyl pyrazole with a polyisocyanate in the conventional manner. The blocking agents are advantageous when used alone, or when used in combination with 1,3-dicarbonyl blocking agent, having a low unblocking temperature, good stability and conferring useful levels of stabilisation when used in combination with 1,3-dicarbonyl blocking agents.

The invention will now be illustrated by the following, non-limiting Examples.

### EXAMPLES

### Reference Example 1: Preparation of HDI trimer blocked with diethyl malonate

HDI trimer (Desmodur N3300) (530.4g); diethyl malonate (933.0g) and sodium methoxide (3.2g). were charged to a laboratory reactor and heated at 70-80°C until the NCO content (determined by titration) was less than 0.5%. A further charge of HDI trimer (530.4g) and diethyl malonate (3.2g) was made and the reaction continued until NCO content was less than 0.1%.

### Reference Example 2: Preparation of HDI trimer blocked with 3.5 DMP

HDI trimer (Desmodur N3300) (661.1g) was charged to a laboratory reactor and heated to 35-40°C. DMP (338.9g) was added slowly, maintaining the temperature below 90°C. The reaction temperature was maintained at approximately 90°C until the NCO content was less than 0.1%.

### Example 1: Preparation of HDI trimer blocked with DMP/diethyl malonate (1:1 mole ratio)

HDI trimer (Desmodur N3300) (1195.4g), diethyl malonate (501.3g) and sodium methoxide (2.9g) were charged to a laboratory reactor and heated at 65-70°C until the NCO content, determined by titration was 7.5%. The reaction was cooled to 56°C and DMP (300.4g) was added. The reaction was heated at approximately 70°C until the NCO content was less than 0.1%.

### Example 2: Comparison of DMP/DEM blocked HDI trimer with a blend of DEM blocked and DMP blocked isocyanates

The following products were prepared:
a) A product prepared according to Reference Example 1 and dissolved in different solvents as detailed in Table 1 below (3 parts solvent to 7 parts blocked isocyanate).
b) A product prepared according to Reference Example 2 and dissolved in different solvents as detailed in Table 1 below (3 parts solvent to 7 parts blocked isocyanate).
c) A product prepared according to Example 1 and dissolved in different solvents as detailed in Table 1 below (3 parts solvent to 7 parts blocked isocyanate).
d) A product prepared by blending the product produced in a) with the product produced in b) above in equal proportions.

The appearance of each sample was observed over a period of time at 23°C, results being shown in Table 1:

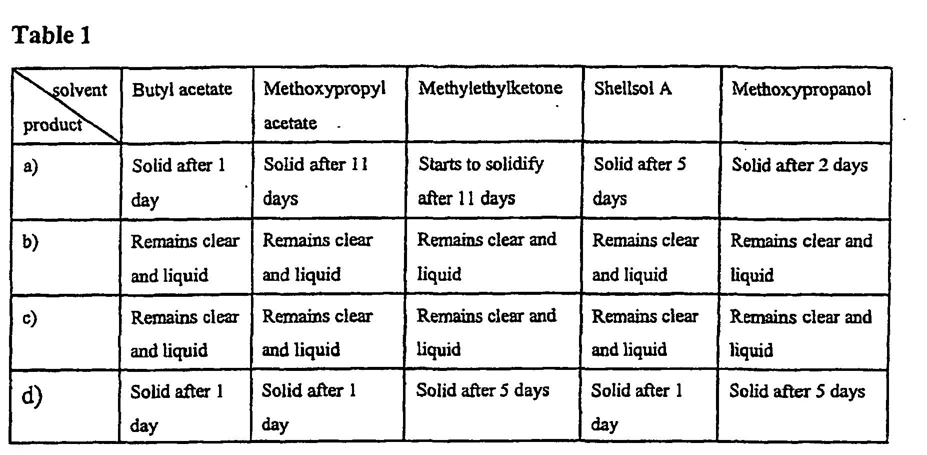

Analysis of the physical blend d) and hybrid c) in methoxypropanol solvent by gpc shows a narrower molecular weight distribution and lower peak molecular weight for the hybrid polyisocyanate c).

### Example 3: Preparation of HDI trimer blocked with DMP.diethyl malonate (1:9 mole ratio)

HDI trimer (Desmodur N3300) (387.8g), diethyl malonate (292.7g) and sodium methoxide (1.0g) were charged to a laboratory reactor and heated at 65-70°C until the NCO content, determined by titration was 1.25%. DMP (19.5g) was added and the reaction maintained at approximately 70°C until the NCO content was less than 0.1%. Methoxypropanol, (300.0g) was added and the product discharged. After 10 days the product was still liquid.

### Example 4: Comparison of the properties of DEM, DMP and DEM/DMP blocked isocyanate

The appearance of the blocked isocyanate produced in Example 3 was monitored and the results compared with corresponding isocyanates blocked with one or the other of DEM and DMP and with a blend of these two blocked isocyanates. The results shown in Table 2 below confirm that the so-called hybrid products have a reduced tendency to crystallise.

**Table 2 Stability**

| | | | |
|---|---|---|---|
| Blocking agent | 1 day | 1 week | 4 weeks |
| DEM only | liquid | crystallised/solidified | crystallised/solidified |
| DMP only | liquid | liquid | liquid |
| Blend of DEM only and DMP only | liquid | crystallised/solidified | crystallised/solidified |
| DEM/DMP hybrid | liquid | liquid | liquid |

The "crystallised" products all solidified although in some cases "crystallised" products do remain clear.

### Example 5

Coatings were made up from the blocked isocyanate of Example 3, or the comparative materials mentioned in Example 4 above, and an acrylic polyol (Crodaplast AC589BN) using DBTL catalyst (0.8% by weight on total solids). The formulations were coated out on primed steel panels and cured at 90, 100 or 120°C for 45 mins. The Tg of the resulting film, MEK resistance (double rubs) and pencil hardness were determined. The ratio of OH:NCO of the coatings compositions was selected to be 1.6:1 for DEM blocked isocyanate (after preliminary tests at 1.3:1 and 1.6:1 showed better cure for the latter), 1:1 for DMP blocked isocyanate and 1.3:1 1 for the hybrid DEM/DMP blocked isocyanate. Results for the optimised formulations are shown in Tables 3, 4 and 5 below:

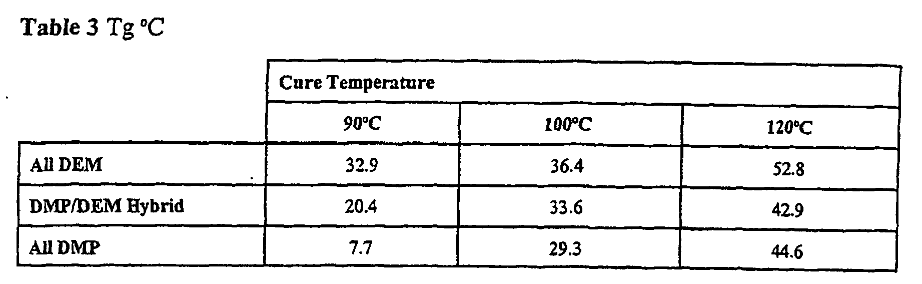

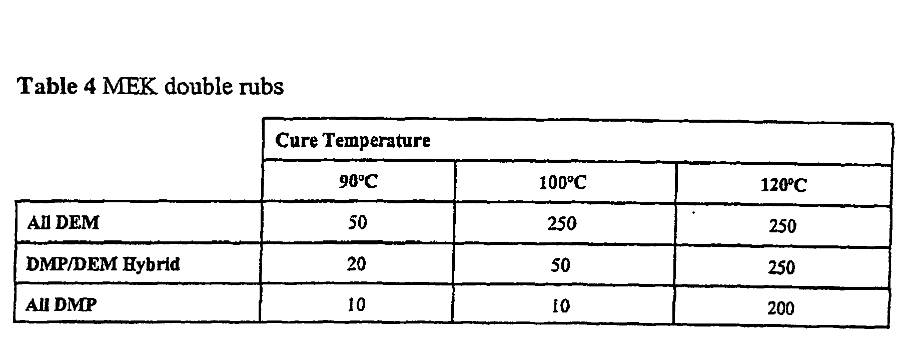

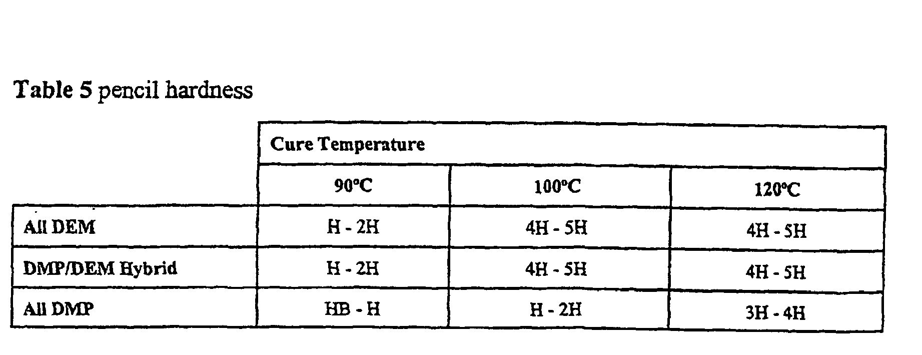

The results show that the cure is increased as temperature is raised. The results also show that at 100°C DEM gives the greater cure, and that at 120°C the hybrid gives improved results over a DMP blocked isocyanate. This difference can be attributed to the two different reaction pathways that are operating. For example, with transesterification taking place at a lower temperature than thermal dissociation only a "partial cure" is effected when the hybrid is used at 100°C since thermal dissociation of DMP blocked isocyanate groups has not taken place fully in the time of the experiment.

The slight differences between the cure achieved at 120°C may be attributed to incomplete reaction of the DMP blocked isocyanate in the reaction time or due to chemical differences in the crosslinked coating (carbamate vs non-carbamate linkages).

In short, the cure of a hybrid blocked isocyanate is similar to or slightly better than a pure DMP blocked isocyanate at 120°C.

### Example 6 Preparation of 3,5-di-t-butylpyrazole (DTP)

2,2,6,6-tetramethyl-3,5-heptandione (25g) was dissolved in dichloromethane (100mls). 100% Hydrazine hydrate (7.12g) was added drop-wise with stirring at room temperature. The mixture was allowed to stir at room temperature (25°C) overnight. A further aliquot of dichloromethane (50ml) was added and the organic phase separated from the aqueous phase. The solvent was removed by evaporation and the resulting solid recrystallised form acetone to give a white crystalline solid. Mp 191-193°C

### Example 7 Preparation of isocyanate blocked with di-t-butyl pycazole.

HDI trimer (Desmodur N3300) (21.41g) was mixed with methoxypropanol (18g). 3,5-di-t-butylpyrazole(21.41g) was added portion-wise over 15 minutes. The reaction mixture was heated to 60°C and stirred for 1.5 hrs. Two further aliquots (0.5g) of dit-butyl pyrazole were added and the reaction stirred until infra red analysis indicated the absence of isocyanate groups.

### Example 8 Preparation of HDI trimer blocked with both diethyl malonate and 3.5-di-tert-butyl pyrazole.

HDI trimer (Desmodur N3300) (73.4g) and diethylmalonate (31.34g) were stirred together at room temperature. Sodium methoxide solution (0.2g of a 27% solution in methanol) was added drop-wise. The reaction temperature was raised to 65°C and monitored by titration until the NCO content was 7.6%. Methoxypropanol (60.0g) was added, followed by 3,5-di-*tert*-butyl pyrazole (35.26g). The reaction temperature was maintained at 65°C and reaction monitored by titration. When the NCO content was approximately 0.53% a further portion of 3,5-di-*tert*-butyl pyrazole (3.0g) was added. IR analysis showed substantially all NCO group had reacted.

### Example 9 Coatings based on 3.5-di-tert-butyl pyrazole blocked polyisocyanates

Coatings were made up analogously to Example 5, except that the DMP blocked isocyanate was replaced by material prepared according to Example 7 and the hybrid DEM/DMP blocked isocyanate was replaced by blocked isocyanate prepared according to Example 8. The ratio of OH:NCO was 1.6:1 for DEM blocked isocyanate and 1:1 for pyrazole blocked isocyanate. For the formulation containing the hybrid DFM/DTP blocked isocyanate, a ratio of 1.3:1 was used. The formulations were coated out on primed steel panels and cured at the indicated temperature for 45 mins., MEK resistance (double rubs) and pencil hardness were determined, all as described above. Results are shown in Tables 6 and 7.

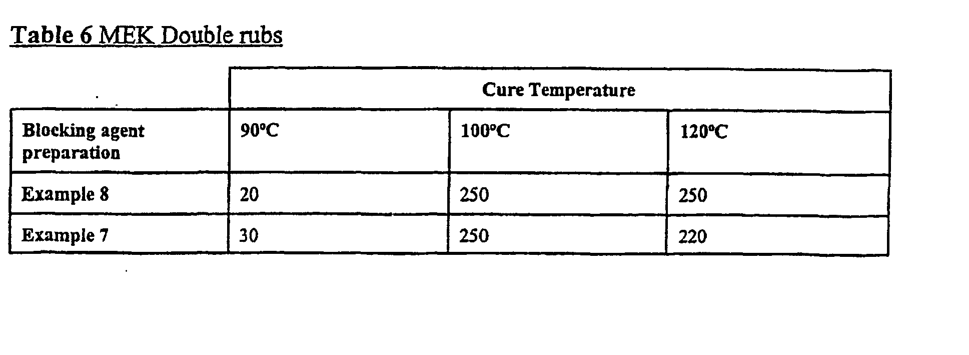

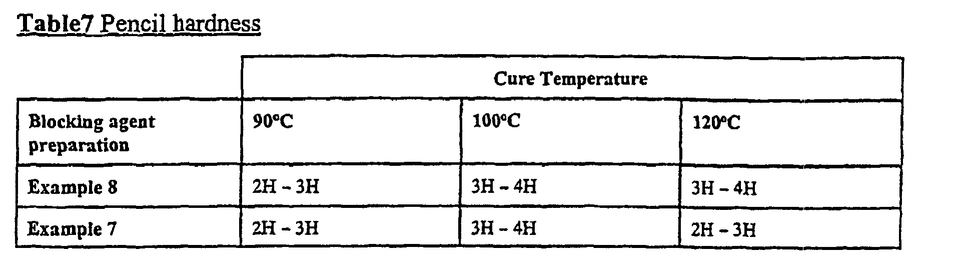

The results were compared to those in Tables 3 and 4. Pencil hardness is of the same order, with the value for the hybrid being lower at 120°C and higher at 100°C. More significant is the dramatic difference in the MEK rub test, with 250 MEK double rubs achieved for both the hybrid DBM/di-t-butyl pyrazole and the di-t-butyl pyrazole alone.

### Example 10 Coatings of DEM/DMP hybrid and a DMP blocked isocyanate.

In the following Example the DEM/DMP hybrid blocked isocyanate is a blocked HDI trimer prepared according to Example 1 and dissolved in methoxypropanol such that the final solids content is 70%. The DMP blocked isocyanate is prepared according to Reference Example 2 and dissolved in methoxypropanol such that the final solids content is 70%.

Coating formulations were prepared according to the following table, coated out onto white primed steel panels at 150µm wet film thickness and stoved at either 120°C for 45 mins or 140°C for 30 mins The formulations are shown in Table 8 and 9. Curing conditions are shown in Table 9.

**Table 8**

| **Ingredient** | **Formulation A g** | **Formualtion B g** |
|---|---|---|
| DMP Blocked isocyanate | 31.21 | None |
| DMP/DEM blocked isocyanate | None | 28.45 |
| Crodaplast AC 589 | 35.35 | 37.93 |
| Methoxypropyl acetate | 18.6 | 18.25 |
| Tego 450 (flow additive) | 0.19 | 0.19 |
| Dibutyltindilaurate (catalyst) | 0.1 | 0.1 |
| Tinuvin 400 (UV stabiliser) | 0.97 | 0.97 |
| Tinuvin 123 (UV stabiliser) | 0.48 | 0.48 |
| Methylethylketone | 13.64 | 13.64 |

**Table 9**

| **Formulation** | **Blocking agent** | **stoving conditions** |
|---|---|---|
| A | DMP | 140°C 30 mins |
| A | DMP | 120°C 45 mins |
| B | DEM/DMP hybrid | 140°C 30 mins |
| B | DEM/DMP hybrid | 120°C 45 mins |

### Example 11

### Preparation of a hybrid blocked isocyanate blocked with 3,5-dimethylpyrazole: diethyl malonate in a ratio of 90:10 at 70% solids concentration.

HDI trimer (Desmodur N3300) (455.5g), diethyl malonate (38.2g) and sodium methoxide (0.2g) were charged to a reactor, mixed and the temperature raised to 65 to 70°C. The reaction was continued until the isocyanate content was 18.20%. 3,5-Dimethylpyrazole (206. 1g) was added, maintaining the temperature below 85°C, followed by addition ofmethoxy propanol (300g). No isocyanate peak was detectable by infrared analysis.

### Example 12

### Preparation of a hybrid blocked isocyanate blocked with 3,5-dimethylpyrazole and diethyl malonate in a ratio of 95:5 at 70% solids concentration.

HDI trimer (Desmodur N3300) (460.6g), diethyl malonate (19.3%) and sodium methoxide (0.2g) were charged to a reactor, mixed and the temperature raised to 65 to 70°C. The reaction was continued until the isocyanate content was 19.7%. 3,5-Dimethylpyrazole (219.9g) was added, maintaining the temperature below 85°C, followed by addition of methoxy propanol (300g). No isocyanate peak was detectable by infrared analysis.

### Preparation Example 1

### Preparation of an isocyanate blocked with 3,5-dimethylpyrazole at 70% solids concentration.

HDI trimer (Desmodur N3300) (925.6g) was charged to a reactor, mixed and the temperature raised to 40°C. 3,5-Dimethylpyrazole (474.4g) was added, maintaining the temperature below 90°C followed by addition of methoxy propanol (300g). No isocyanate peak was detectable by infra red analysis.

### Preparation Example 2

### Preparation of an isocyanate blocked with diethyl malonate at 76% solids concentration.

HDI trimer (Desmodur N3300) (1007.5g), diethyl malonate (1773.0g) and sodium methoxide (6.0g) were charged to a reactor, mixed and the temperature raised to 65-70°C. Reaction was continued until isocyanate content was less than 0.1%. A further amount of HDI trimer (1007.6g) and sodium methoxide (6.0g) were added, maintaining the temperature below 70°C. When the isocyanate content was less than 0.1 %, methoxy propanol (1200g) was added. No isocyanate peak was detectable by infra red analysis.

### Examples 13 to 22

### Preparation of clear coats.

All clear coats were made-up by mixing together the appropriate amount of blocked isocyanate(s) (see Table 10 below) with the appropriate amount of acrylic resin (Crodaplast AC589) (see Table 10). The following amounts of other reagents were added: dibutyl tin dilaurate (0.1%); flow additive (Tego 450) (diluted to 50% in butyl acetate, 0.19%); ultraviolet stabiliser (Tinuvin 400) (0.97%); ultraviolet stabiliser (Tinuvin 123) (0.48%), methylethylketone (13.64%) and methoxypropyl acetate (appropriate amount to make-up to 100%).

### Determination of intercoat adhesion.

Phosphate treated panels were primed by coating with a proprietary primer formulation (applied at 100µm wet film thickness) followed by curing at 140°C for 30 minutes. A proprietary basecoat was applied at 90µm wet film thickness, dried at 50°C for 15 minutes, followed by application of a clearcoat formulation made-up according to Table 10, applied at 120µm wet film thickness. The coated panels were then cured at 140°C for 30 minutes. The cured coatings were then overcoated with the same proprietary basecoat, applied at 90µm wet film thickness, dried at 50°C for 15 minutes, followed by application of the same clearcoat, applied at 120µm wet film thickness. The overcoated panels were then cured at 140°C for 30 minutes. Cross-cut adhesion tests were carried out using BS3900 part E6 (1992). The results are shown in Table 10. A rating of 5 is very poor and a rating of 0 is the best (no failure of adhesion observed). Where failure of adhesion occurred it was between the first clearcoat and the second basecoat.

### Example 23 Determination of unblocking temperature in absence of active hydrogen compounds

One way to determine the unblocking temperature of thermally active blocking agents is to monitor the appearance of the free isocyanate at elevated temperature by infra red spectroscopy:

A round bottomed flask (2 litre) equipped with stirrer and temperature recording was placed in an isomantle. The infrared probe of a Mettler Toledo React IR 4000 was placed in the flask to record the infrared spectrum during the reaction, in particular the absorption band at 2270 cm⁻¹ (the band corresponding to the absorption of an isocyanate group (-NCO)). Propylene glycol mono methyl ether acetate (Dowanol PMA, 1500g), was charged followed by HDI biuret (20.0g). The temperature was raised to 60°C and 3,5-di-*tert*-butyl pyrazole (DBTP, 19.23g) added. The intensity of the band at 2270 cm⁻¹ was monitored. After reacting at 60°C for one hour and cooling to 25°C overnight (ca. 18 hours) no absorbance at 2270 cm⁻¹ was detectable, indicating the NCO groups had fully reacted with the DBTP. On heating the product to 60°C the peak at 2270 cm⁻¹ reappeared, indicating the regeneration of the isocyanate functionality.

A similar experiment carried out using 3,5-dimethyl pyrazole (DMP) in place of DTBP did not show the reappearance of the NCO band until 95°C. This demonstrates the lower unblocking temperature of DTBP compared with DMP.

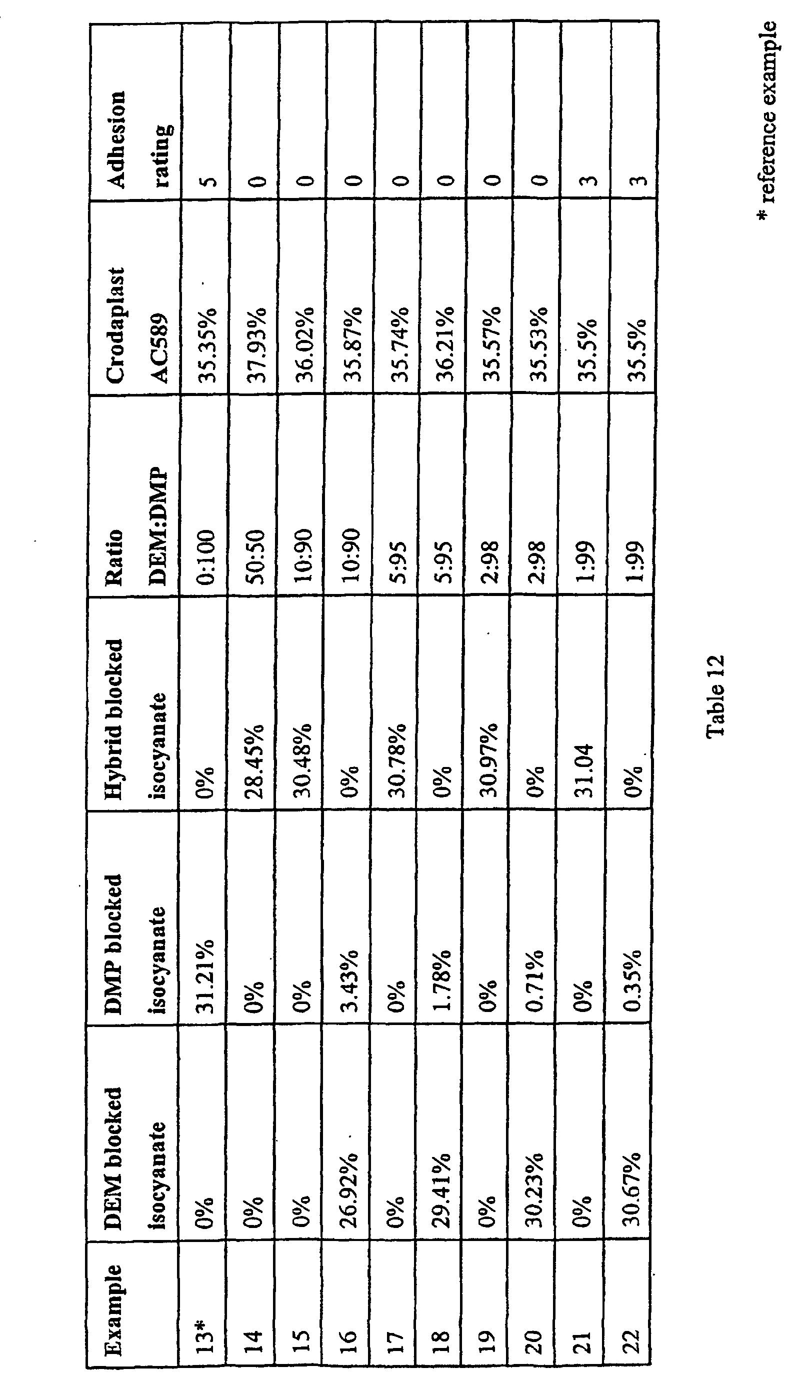

## Claims

1. Use of a mixed blocked polyisocyanate product in a curable composition wherein the mixed blocked polyisocyanate product is obtainable by blocking one or more polyisocyanates with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99.

2. Use according to claim 1 wherein the mixed blocked polyisocyanate product is a hybrid blocked polyisocyanate product in which at least a proportion of the molecules are blocked with a 1,3-dicarbonyl blocking group and a thermally active group.

3. Use according to claim 1 wherein the mixed blocked polyisocyanate product is a blend comprising a polyisocyanate blocked with at least one 1,3-dicarbonyl group and the same or a different polyisocyanate blocked with at least one thermally active group.

4. Use according to claim 1 wherein the mixed blocked polyisocyanate product is a blend comprising two or more hybrid blocked polyisocyanates.

5. Use according to claim 1 wherein the mixed blocked polyisocyanate product is a blend comprising (a) a hybrid blocked polyisocyanate and at least one of (b) a polyisocyanate blocked with at least one 1,3-dicarbonyl group and (c) a polyisocyanate blocked with at least one thermally active group.

6. A process of overcoating a cured coating formed from a composition comprising a mixed blocked polyisocyanate product obtainable by blocking one or more polyisocyanates with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99, and an active hydrogen containing compound, which process comprises applying a further layer over the cured coating and curing the further layer.

7. A coating composition comprising an active hydrogen containing compound and a mixed blocked polyisocyanate product obtainable by blocking one or more polyisocyanates with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is from 4:1 to 1:99.

8. An industrial process which comprises:
i) coating articles with a coating composition comprising a mixed blocked polyisocyanate product obtainable by blocking one or more polyisocyanates with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99, and an active hydrogen containing compound,
ii) curing the coating,
iii) inspecting the articles for defects, and
iv) recoating defective articles totally or in part.

9. A process according to claim 8 wherein the recoating step involves coating with one or more layers and then overcoating with a coating composition comprising an active hydrogen containing compound and a mixed blocked polyisocyanate product obtainable by blocking one or more polyisocyanates with at least one 1,3-dicarbonyl blocking agent selected from diethyl malonate, dimethyl malonate, Meldrum's acid and ethyl acetoacetate, and at least one thermally active blocking agent selected from pyrazoles, such that the molar ratio of 1,3-dicarbonyl blocking groups to thermally active blocking groups in the mixed blocked polyisocyanate is in the range of from 4:1 to 1:99, and curing.

10. A hybrid blocked polyisocyanate having at least one 1,3-dicarbonyl blocking group derived from diethyl malonate, dimethyl malonate, Meldrum's acid or ethyl acetoacetate, and at least one thermally active blocking group derived from a pyrazole, such that the molar ratio of 1,3-dicarbonyl blocking groups to thermally active blocking groups in the hybrid blocked polyisocyanate is in the range of from 4:1 to 1:9.

11. A hybrid blocked polyisocyanate according to claim 10 wherein one 1,3-dicarbonyl blocking group is diethyl malonate and one thermally active blocking group is 3,5-dimethyl pyrazole, 3-*iso*-butyl-5-*tert*-butyl pyrazole, 3-*iso*-butyl-5-methyl pyrazole or 3,5-di-*tert*-butyl pyrazole.

12. A hybrid blocked polyisocyanate according to claim 10 or 11 blocked only with one 1,3-dicarbonyl blocking agent and one thermally active blocking agent.

13. Use, process, coating composition or industrial process according to any one of claims 1 to 9 wherein the mixed blocked polyisocyanate is a hybrid blocked polyisocyanate according to any one of claims 10 to 12.

14. A process which comprises reacting one or more polyisocyanates with a 1,3-dicarbonyl blocking agent selected from diethyl malonate, dimethyl malonate, Meldrum's acid and ethyl acetoacetate, and a thermally active blocking agent selected from pyrazoles so as to form a hybrid blocked polyisocyanate having a molar ratio of 1,3-dicarbonyl blocking groups to thermally active blocking groups in the range of from 4:1 to 1:9.

15. A process according to claim 14 wherein the 1,3-dicarbonyl blocking compound is diethyl malonate and the thermally active blocking agent is 3,5-dimethylpyrazole, 3-*iso*-butyl-5-*tert*-butyl pyrazole, 3-*iso*-butyl-5-methyl pyrazole or 3,5-di-*tert*-butyl pyrazole and the molar ratio of diethyl malonate blocking group to 3,5-dimethyl pyrazole, 3-*iso*-butyl-5-*tert*-butyl pyrazole, 3-*iso-*butyl-5-methyl pyrazole or 3,5-di-*tert*-butyl pyrazole blocking group in the hybrid blocked polyisocyanate is 1:1.

16. A process according to claim 14 or claim 15 of producing a hybrid blocked polyisocyanate according to claim 11 or 12.

17. Use, process, coating composition or industrial process according to any one of claim 1 to 9 wherein the mixed blocked polyisocyanate is a hybrid blocked polyisocyanate produced according to a process according to any one of claims 14 to 16.

18. A branched alkyl pyrazole of formula (IV) 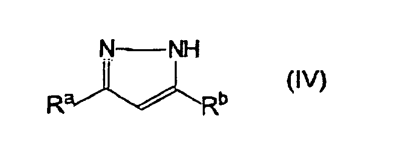
wherein R^{a} is alkyl of 1 to 6 carbon atoms and R^{b} is a branched alkyl of 3 to 6 carbon atoms, other than pyrazoles in which one of R^{a} and R^{b} is text-butyl and the other is methyl, iso-propyl or tert-butyl.

19. A pyrazole selected from:
3-methyl-5-*iso*-propyl pyrazole,
3-*iso*-butyl-5-methyl pyrazole,
3-*sec*-butyl-5-methyl pyrazole,
3-ethyl-5-*iso*-propyl pyrazole,
3-*iso*-butyl-5-ethyl pyrazole,
3-*sec*-butyl-5-ethyl pyrazole,
3-*tert*-butyl-5-ethyl pyrazole,
3-*iso*-propyl-5-*n*-propyl pyrazole,
3-*iso*-butyl-5-*n*-propyl pyrazole,
3-*sec-*butyl-5-*n*-propyl pyrazole,
3-*tert*-butyl-5-*n*-propyl pyrazole,
3-*n*-butyl-5-*iso*-propyl pyrazole,
3-*iso*-butyl-5-*n*-butyl pyrazole,
3-*n*-butyl-5-*sec*-butyl pyrazole,
3-*n*-butyl-5-*tert*-butyl pyrazole,
3,5-di-*iso-*propyl pyrazole,
3-*iso*-butyl-5-*iso*-propyl pyrazole,
3-*sec*-butyl-5-*iso*-propyl pyrazole,
3,5-di-*iso*-butyl pyrazole,
3-*iso*-butyl-5-*sec*-butyl pyrazole,
3-*iso*-butyl-5-*tert*-butyl pyrazole,
3,5-di-*sec*-butyl pyrazole and
3-*sec*-butyl-5-*tert*-butyl pyrazole.

20. A blocked polyisocyanate bearing blocking groups derived from a branched alkyl pyrazole according to claim 18 or claim 19.

21. A blocked polyisocyanate according to claim 20 also bearing blocking groups derived from a 1,3-dicarbonyl blocking agent selected from diethyl malonate, dimethyl malonate, Meldrum's acid and ethyl acetoacetate.

22. A composition comprising a blocked polyisocyanate according to any one of claims 10 to 12, 20 or 21, or produced according to any one of claims 14 to 16 and at least one monofunctional or bifunctional compound containing active hydrogen.

23. A composition according to claim 22 which further comprises a Pigment.

24. A composition according to claim 22 or claim 23 which contains 0.5 to 2 blocked isocyanate groups per active hydrogen group.

25. Use of a blocked polyisocyanate according to any one of claims 10 to 12, 20 or 21, or produced according to any one of claims 14 to 16 in a clear coating, paint, elastomer, adhesive, molding composition or surface treatment.

26. A process of coating a substrate which comprises depositing onto the substrate a composition as defined in any one of claims 22 to 24 and then heating the deposited composition to crosslink it.

27. A cured coating comprising a polymer and free pyrazole blocking agent, wherein the polymer comprises as a repeating unit the moiety of Formula (III) 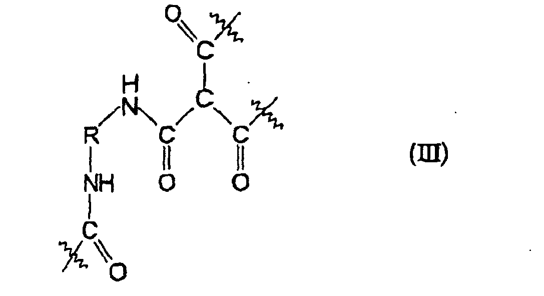
wherein the moiety 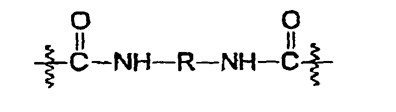 is derived from a di- or higher isocyanate.

28. A cured coating according to claim 27 wherein the free pyrazole blocking agent is 3,5-dimethyl pyrazole, 3-*iso*-butyt-5-*tert*-butyl pyrazole, 3-*iso-*butyl-5-methyl pyrazole or 3,5-di-*tert*-butyl pyrazole.

29. A polymer obtainable by thermally unblocking and curing a coating composition comprising a hybrid blocked polyisocyanate according to any one of claims 10 to 12, 20 or 21, or produced according to any one of claims 14 to 16 and bearing a pyrazole blocking group, wherein the polymer comprises as a repeating unit the moiety of Formula (III) 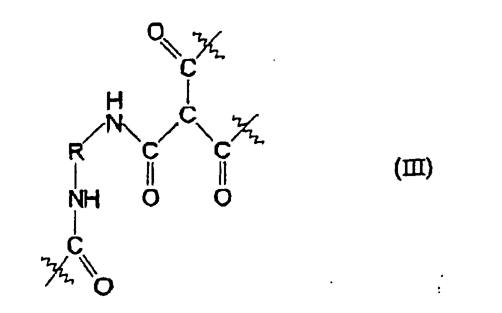
wherein the moiety 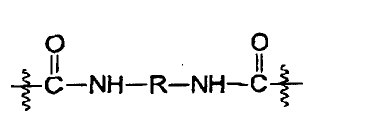 is derived from a di- or higher isocyanate.

30. A polymer according to claim 29 comprising a free pyrazole selected from 3,5-dimethyl pyrazole, *3-iso-*butyl*-*5*-tert*-butyl pyrazole, 3-*iso*-butyl-5-methyl pyrazole and 3,5-di-*tert*-butyl pyrazole.

## Revendications

1. Utilisation d'un produit de polyisocyanate bloqué mixte dans une composition durcissable dans laquelle le produit de polyisocyanate bloqué mixte est obtenu en bloquant un ou plusieurs polyisocyanates avec au moins un agent bloquant 1,3-dicarbonyle choisi parmi le malonate de diéthyle, le malonate de diméthyle, l'acide de Meldrum et l'acétoacétate d'éthyle, et au moins un agent bloquant thermiquement actif choisi parmi les pyrazoles, de telle sorte que le rapport molaire des groupes bloquants 1,3-dicarbonyle sur les groupes bloquants thermiquement actifs dans le polyisocaynate bloqué mixte est dans la gamme de 4 : 1 à 1 : 99.

2. Utilisation selon la revendication 1, dans laquelle le produit de polyisocyanate bloqué mixte est un produit de polyisocyanate bloqué hybride dans lequel au moins une proportion des molécules sont bloquées avec un groupe bloquant 1,3-dicarbonyle et un groupe thermiquement actif.

3. Utilisation selon la revendication 1, dans laquelle le produit de polyisocyanate bloqué mixte est un mélange comprenant un polyisocyanate bloqué avec au moins un groupe 1,3-dicarbonyle et le même ou un différent polyisocyanate bloqué par au moins un groupe thermiquement actif.

4. Utilisation selon la revendication 1, dans laquelle le produit de polyisocyanate bloqué mixte est un mélange comprenant deux ou plus polyisocyanates bloqués hybrides.

5. Utilisation selon la revendication 1, dans laquelle le produit de polyisocyanate bloqué mixte est un mélange comprenant (a) un polyisocyanate bloqué hybride et au moins l'un de (b) un polysisocyanate bloqué avec au moins un groupe 1,3-dicarbonyle et (c) un polyisocyanate bloqué avec au moins un groupe thermiquement actif.

6. Procédé pour surrevêtir un revêtement durci formé à partir d'une composition comprenant un produit de polyisocyanate bloqué mixte pouvant être obtenu en bloquant un ou plusieurs polysisocyanates avec au moins un agent bloquant 1,3-dicarbonyle choisi parmi le malonate de diéthyle, le malonate de diméthyle, l'acide de Meldrum et l'acétoacétate d'éthyle, et au moins un agent bloquant thermiquement actif choisi parmi les pyrazoles, de telle sorte que le rapport molaire des groupes bloquants 1,3-dicarbonyle sur les groupes bloquants thermiquement actifs dans le polyisocyanate mixte bloqué est dans la gamme de 4 : 1 à 1 : 99, et un composé contenant de l'hydrogène actif, lequel procédé comprend l'application d'une couche additionnelle sur le revêtement durci et le durcissement de la couche additionnelle.

7. Composition de revêtement comprenant un composé contenant de l'hydrogène actif et un produit de polyisocyanate bloqué mixte pouvant être dobtenu en bloquant un ou plusieurs polysisocyanates avec au moins un agent bloquant 1,3-dicarbonyle choisi parmi le malonate de diéthyle, le malonate de diméthyle, l'acide de Meldrum et l'acétoacétate d'éthyle, et avec au moins un agent bloquant thermiquement actif choisi parmi les pyrazoles, de telle sorte que le rapport molaire des groupes bloquants 1,3-dicarbonyle sur les groupes bloquants thermiquement actifs dans le polyisocyanate mixte bloqué est de 4 : 1 à 1 : 99.

8. Procédé industriel qui comprend :
i) le revêtement d'articles avec une composition de revêtement comprenant un produit de polyisocyanate bloqué mixte pouvant être obtenu en bloquant un ou plusieurs polyisocyanates avec au moins un agent bloquant 1,3-dicarbonyle choisi parmi le malonate de diéthyle, le malonate de diméthyle, l'acide de Meldrum et l'acétoacétate d'éthyle, et avec au moins un agent bloquant thermiquement actif choisi parmi les pyrazoles, de telle sorte que le rapport molaire des groupes bloquants 1,3-dicarbonyle sur les groupes actifs bloquants dans le polyisocaynate bloqué mixte est dans la gamme de 4 : 1 à 1 : 99, et un composé contenant de l'hydrogène actif,
ii) le durcissement du revêtement,
iii) l'inspection des articles pour détecter les défauts, et
iv) le re-revêtement des articles défectueux complètement ou en partie.

9. Procédé selon la revendication 8, dans laquelle l'étape de re-revêtement implique un revêtement avec une ou plusieurs couches puis le sur-revêtement avec une composition de revêtement comprenant un composé contenant de l'hydrogène actif et un produit de polyisocyanate bloqué mixte pouvant être obtenu en bloquant un ou plusieurs polyisocyanates avec au moins un agent bloquant 1,3-dicarbonyle choisi parmi le malonate de diéthyle, le malonate de diméthyle, l'acide de Meldrum et l'acétoacétate d'éthyle, et avec au moins un agent bloquant thermiquement actif choisi parmi les pyrazoles, de telle sorte que le rapport molaire sur les groupes bloquants 1,3-dicarbonyle aux groupes actifs bloquants dans le polyisocaynate bloqué mixte est dans la gamme de 4 : 1 à 1 : 99, et un durcissement.

10. Polyisocyanate bloqué hybride ayant au moins un groupe bloquant 1,3-dicarbonyle dérivé de malonate de diéthyle, de malonate de diméthyle, d'acide de Meldrum ou d'acétoacétate d'éthyle, et ayant au moins un groupe bloquant thermiquement actif dérivé d'un pyrazole, de sorte que le rapport molaire des groupes bloquants 1,3-dicarbonyle sur les groupes bloquants thermiquement actifs dans le polyisocyanate bloqué hybride est dans la gamme de 4 : 1 à 1 : 9.

11. Polyisocyanate bloqué hybride selon la revendication 10, dans lequel un groupe bloquant 1,3-dicarbonyle est le malonate de diéthyle et un groupe bloquant thermiquement actif est le 3,5-diméthyl pyrazole, le 3-*iso*-butyl-5-*tert*-butyl pyrazole, le *3-iso-*butyl-5-méthyl pyrazole ou le 3,5-di-*tert*-butyl pyrazole.

12. Polyisocyanate bloqué hybride selon la revendication 10 ou 11, bloqué uniquement avec un agent bloquant 1,3-dicarbonyle et un agent bloquant thermiquement actif.

13. Utilisation, procédé, composition de revêtement ou procédé industriel selon l'une quelconque des revendications 1 à 9, dans lesquels le polyisocyanate bloqué mixte est un polyisocyanate bloqué hybride selon l'une quelconque des revendications 10 à 12.

14. Procédé qui comprend la réaction d'un ou plusieurs polyisocyanate(s) avec un agent bloquant 1,3-dicarbonyle choisi parmi le malonate de diéthyle, le malonate de diméthyle, l'acide de Meldrum et l'acétoacétate d'éthyle, et un agent bloquant thermiquement actif choisi parmi les pyrazoles de façon à former un polyisocyanate bloqué hybride ayant un rapport molaire des groupes bloquants 1,3-dicarbonyle sur les groupes bloquants thermiquement actifs dans la gamme de 4 : 1 à 1 : 9.

15. Procédé selon la revendication 14, dans lequel le composé bloquant 1,3-dicarbonyle est le malonate de diéthyle et l'agent bloquant thermiquement actif est le 3,5-diméthylpyrazole, le 3-*iso*-butyl-5-*tert*-butyl pyrazole, le 3-iso-butyl-5-méthyl pyrazole ou le 3,5-di-*tert*-butyl pyrazole et le rapport molaire du groupe bloquant malonate d'éthyle sur le groupe bloquant 3,5-diméthylpyrazole, 3-*iso*-butyl-5-*tert*-butyl pyrazole, 3-*iso*-butyl-5-méthyl pyrazole ou 3,5-di-*tert*-butyl pyrazole dans le polyisocyanate bloqué hybride est de 1 : 1.

16. Procédé selon la revendication 14 ou la revendication 15, destiné à produire un polyisocyanate bloqué hybride selon la revendication 11 ou 12.

17. Utilisation, procédé, composition de revêtement ou procédé industriel selon l'une quelconque des revendications 1 à 9, dans lesquels le polyisocyanate bloqué mixte est un polyisocyanate bloqué hybride produit selon un procédé selon l'une quelconque de revendications 14 à 16.

18. Alkyl pyrazole ramifié répondant à la formule (IV) 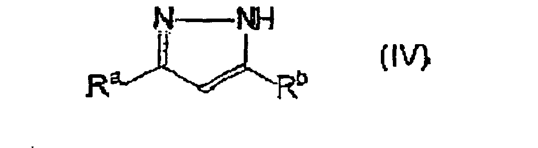 dans laquelle R^{a} est un groupe alkyle de 1 à 6 atomes de carbone et R^{b} est un groupe alkyle ramifié de 3 à 6 atomes de carbone, autres que ceux des pyrazoles dans lesquels l'un de R^{a} et R^{b} est le groupe tert-butyle et l'autre est un groupe méthyle, iso-propyle ou tert-butyle.

19. Pyrazole choisi parmi :
le 3-méthyl-5-*iso*-propyl pyrazole,
le 3-*iso*-butyl-5-méthyl pyrazole,
le 3-*sec*-butyl-5-méthyl pyrazole,
le 3-éthyl-5-*iso*-propyl pyrazole,
le 3-*iso*-butyl-5-éthyl pyrazole,
le 3-*sec*-butyl-5-éthyl pyrazole,
le 3-*tert*-butyl-5-éthyl pyrazole,
le 3-*iso*-propyl-5-*n*-propyl pyrazole,
le 3-*iso*-butyl-5-*n*-propyl pyrazole,
le 3-*sec*-butyl-5-*n*-propyl pyrazole,
le 3-tert-butyl-5-n-propyl pyrazole,
le 3-n-butyl-5-*iso*-propyl pyrazole,
le 3-*iso*-butyl-5-*n*-butyl pyrazole,
le 3-*n*-butyl-5-*sec*-butyl pyrazole,
le 3-n-butyl-5-*tert*-butyl pyrazole,
le 3,5-di-*iso*-propyl pyrazole,
le 3-*iso*-butyl-5-*iso*-propyl pyrazole,
le 3-*sec*-butyl-5-*iso*-propyl pyrazole,
le 3,5-di-*iso*-butyl pyrazole,
le 3-*iso*-butyl-5-*sec*-butyl pyrazole,
le 3-*iso*-butyl-5-*tert*-butyl pyrazole,
le 3,5 -di-*sec*-butyl pyrazole et
le 3-*sec*-butyl-5-*tert*-butyl pyrazole.

20. Polyisocyanate bloqué portant des groupes bloquants dérivés d'un alkyl pyrazole ramifié selon la revendication 18 ou la revendication 19.

21. Polyisocyanate bloqué selon la revendication 20, portant également des groupes bloquants dérivés d'un agent bloquant 1,3-dicarbonyle choisi parmi le malonate de diéthyle, le malonate de diméthyle, l'acide de Meldrum et l'acétoacétate d'éthyle.

22. Composition comprenant un polyisocyanate bloqué selon l'une quelconque des revendications 10 à 12, 20 ou 21, ou produite selon l'une quelconque des revendications 14 à 16 et au moins un composé monofonctionnel ou bifonctionnel contenant de l'hydrogène actif.

23. Composition selon la revendication 22, qui comprend en outre un pigment.

24. Composition selon la revendication 22 ou la revendication 23, qui contient 0,5 à 2 groupes isocyanates bloqués par groupe hydrogène actif.

25. Utilisation d'un polyisocyanate bloqué selon l'une quelconque des revendications 10 à 12, 20 ou 21, ou produit selon l'une quelconque des revendications 14 à 16, dans un revêtement clair, une peinture, un élastomère, un adhésif, une composition de moulage ou un traitement de surface.

26. Procédé de revêtement d'un substrat, qui comprend le dépôt sur le substrat d'une composition telle que définie dans l'une quelconque des revendications 22 à 24 puis le chauffage de la composition déposée pour la réticuler.

27. Revêtement durci comprenant un polymère et un agent bloquant pyrazole libre, dans lequel le polymère comprend en tant que motif répété la fraction répondant à la formule (III) 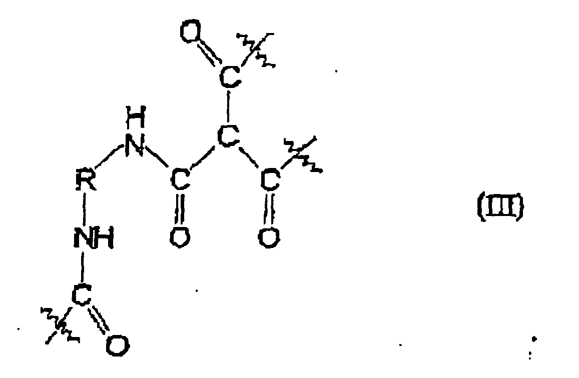
dans laquelle la fraction 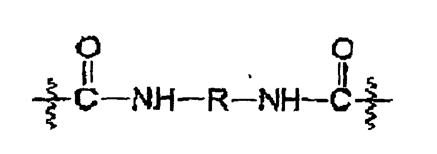 est dérivée d'un di-isocyanate ou un isocyanate supérieur.

28. Revêtement durci selon la revendication 27, dans lequel l'agent bloquant pyrazole libre est le 3,5-diméthyl pyrazole, le 3-*iso*-butyl-5-*tert*-butyl pyrazole, le 3-*iso*-butyl-5-méthyl pyrazole ou le 3,5-di-*tert*-butyl pyrazole.

29. Polymère pouvant être obtenu en débloquant thermiquement et en durcissant une composition de revêtement comprenant un polyisocyanate bloqué hybride selon l'une quelconque des revendications 10 à 12, 20 ou 21, ou produit selon l'une quelconque des revendications 14 à 16 et portant un groupe bloquant pyrazole, dans lequel le polymère comprend en tant que motif répété, la fraction répondant à la formule (III) 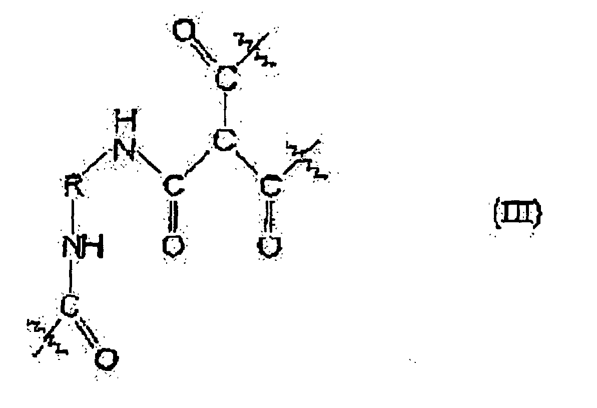
dans laquelle la fraction 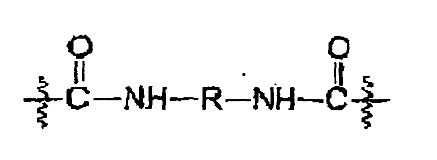 est dérivée d'un di-isocyanate ou un isocyanate supérieur.

30. Polymère selon la revendication 29, comprenant un pyrazole libre choisi parmi le 3,5-diméthyl pyrazole, le 3-*iso*-butyl-5-*tert*-butyl pyrazole, le 3-*iso*-butyl-5-méthyl pyrazole et le 3,5-di-*tert*-butyl pyrazole.

## Patentansprüche

1. Verwendung eines gemischt-blockierten Polyisocyanatprodukts in einer härtbaren Zusammensetzung, wobei das gemischt-blockierte Polyisocyanatprodukt durch Blockieren eines Polyisocyanats oder mehrerer Polyisocyanate mit wenigstens einem 1,3-Dicarbonyl-Blockierungsmittel, ausgewählt aus Diethylmalonat, Dimethylmalonat, Meldrumsäure und Ethylacetoacetat, und wenigstens einem wärmeaktiven Blockierungsmittel, ausgewählt aus Pyrazolen, wobei das molare Verhältnis von 1,3-Dicarbonyl-Blockierungsgruppen zu wärmeaktiven Blockierungsgruppen in dem gemischt-blockierten Polyisocyanat im Bereich von 4:1 bis 1:99 liegt, erhältlich ist.

2. Verwendung nach Anspruch 1, wobei das gemischt-blockierte Polyisocyanatprodukt ein Hybrid-blockiertes Polyisocyanatprodukt ist, bei dem wenigstens ein Anteil der Moleküle mit einer 1,3-Dicarbonyl-Blockierungsgruppe und einer wärmeaktiven Gruppe blockiert ist.

3. Verwendung nach Anspruch 1, wobei das gemischt-blockierte Polyisocyanatprodukt ein Gemisch ist, umfassend ein Polyisocyanat, das mit wenigstens einer 1,3-Dicarbonylgruppe blockiert ist, und das gleiche oder ein anderes Polyisocyanat, das mit wenigstens einer wärmeaktiven Gruppe blockiert ist.

4. Verwendung nach Anspruch 1, wobei das gemischt-blockierte Polyisocyanatprodukt ein Gemisch ist, umfassend zwei oder mehrere Hybrid-blockierte Polyisocyanate.

5. Verwendung nach Anspruch 1, wobei das gemischt-blockierte Polyisocyanatprodukt ein Gemisch ist, umfassend (a) ein Hybrid-blockiertes Polyisocyanat und wenigstens eines von (b) einem mit wenigstens einer 1,3-Dicarbonylgruppe blokkierten Polyisocyanat und (c) einem mit wenigstens einer wärmeaktiven Gruppe blockierten Polyisocyanat.

6. Verfahren zum Überschichten einer gehärteten Beschichtung, die aus einer Zusammensetzung, umfassend ein gemischt-blockiertes Polyisocyanatprodukt, das durch Blockieren eines Polyisocyanats oder mehrerer Polyisocyanate mit wenigstens einem 1,3-Dicarbonyl-Blockierungsmittel, ausgewählt aus Diethylmalonat, Dimethylmalonat, Meldrumsäure und Ethylacetoacetat, und wenigstens einem wärmeaktiven Blockierungsmittel, ausgewählt aus Pyrazolen, wobei das molare Verhältnis von 1,3-Dicarbonyl-Blockierungsgruppen zu wärmeaktiven Blockierungsgruppen in dem gemischt-blockierten Polyisocyanat im Bereich von 4:1 bis 1:99 liegt, erhältlich ist, und eine Verbindung, die aktiven Wasserstoff enthält, erzeugt ist, wobei das Verfahren das Aufbringen einer weiteren Schicht über die gehärtete Schicht und das Härten der weiteren Schicht umfasst.

7. Beschichtungszusammensetzung, umfassend eine Verbindung, die aktiven Wasserstoff enthält, und ein gemischt-blockiertes Polyisocyanatprodukt, das durch Blockieren eines Polyisocyanats oder mehrerer Polyisocyanate mit wenigstens einem 1,3-Dicarbonyl-Blockierungsmittel, ausgewählt aus Diethylmalonat, Dimethylmalonat, Meldrumsäure und Ethylacetoacetat, und wenigstens einem wärmeaktiven Blockierungsmittel, ausgewählt aus Pyrazolen, wobei das molare Verhältnis von 1,3-Dicarbonyl-Blockierungsgruppen zu wärmeaktiven Blockierungsgruppen in dem gemischt-blockierten Polyisocyanat im Bereich von 4:1 bis 1:99 liegt, erhältlich ist.

8. Industrielles Verfahren, umfassend:
i) Beschichten von Gegenständen mit einer Beschichtungszusammensetzung, umfassend ein gemischt-blockiertes Polyisocyanatprodukt, das durch Blockieren eines Polyisocyanats oder mehrerer Polyisocyanate mit wenigstens einem 1,3-Dicarbonyl-Blockierungsmittel, ausgewählt aus Diethylmalonat, Dimethylmalonat, Meldrumsäure und Ethylacetoacetat, und wenigstens einem wärmeaktiven Blockierungsmittel, ausgewählt aus Pyrazolen, wobei das molare Verhältnis von 1,3-Dicarbonyl-Blockierungsgruppen zu wärmeaktiven Blockierungsgruppen in dem gemischt-blockierten Polyisocyanat im Bereich von 4:1 bis 1:99 liegt, efiältlich ist, und eine Verbindung, die aktiven Wasserstoff enthält,
ii) Härten der Beschichtung,
iii) Untersuchen der Gegenstände auf Fehler, und
iv) teilweises oder vollständiges Neubeschichten von fehlerhaften Gegenständen.

9. Verfahren nach Anspruch 8, wobei der Neubeschichtungs-Schritt das Beschichten mit einer Schicht oder mehreren Schichten und anschließendes Überschichten mit einer Beschichtungszusammensetzung, umfassend eine Verbindung, die aktiven Wasserstoff enthält, und ein gemischt-blockiertes Polyisocyanatprodukt, das durch Blockieren eines Polyisocyanats oder mehrerer Polyisocyanate mit wenigstens einem 1,3-Dicarbonyl-Blockierungsmittel, ausgewählt aus Diethylmalonat, Dimethylmalonat, Meldrumsäure und Ethylacetoacetat, und wenigstens einem wärmeaktiven Blockierungsmittel, ausgewählt aus Pyrazolen, wobei das molare Verhältnis von 1,3-Dicarbonyl-Blockierungsgruppen zu wärmeaktiven Blockierungsgruppen in dem gemischt-blockierten Polyisocyanat im Bereich von 4:1 bis 1:99 liegt, erhältlich ist, und Härten umfasst.

10. Hybrid-blockiertes Polyisocyanat mit wenigstens einer 1,3-Dicarbonyl-Blockierungsgruppe, die von Diethylmalonat, Dimethylmalonat, Meldrumsäure oder Ethylacetoacetat abgeleitet ist, und wenigstens einer wärmeaktiven Blockierungsgruppe, die von einem Pyrazol abgeleitet ist, wobei das molare Verhältnis von 1,3-Dicarbonyl-Blockierungsgruppen zu wärmeaktiven Blockierungsgruppen in dem Hybrid-blockierten Polyisocyanat im Bereich von 4:1 bis 1:9 liegt

11. Hybrid-blockiertes Polyisocyanat nach Anspruch 10, wobei eine 1,3-Dicarbonyl-Blockierungsgruppe Diethylmalonat ist und eine wärmeaktive Blockierungsgruppe 3,5-Dimethylpyrazol, 3-*iso*-Butyl-5-*tert*-butylpyrazol, 3-*iso*-Butyl-5-methylpyrazol oder 3,5-Di-*tert* butylpyrazol ist.

12. Hybrid-blockiertes Polyisocyanat nach Anspruch 10 oder 11, das nur mit einem 1,3-Dicarbonyl-Blockierungsmittel und einem wärmeaktiven Blockierungsmittel blockiert ist.

13. Verwendung, Verfahren, Beschichtungszusammensetzung oder industrielles Verfahren nach einem der Ansprüche 1 bis 9, wobei das gemischt-blockierte Polyisocyanat ein Hybrid-blockiertes Polyisocyanat nach einem der Ansprüche 10 bis 12 ist.

14. Verfahren, umfassend das Umsetzen eines Polyisocyanats oder mehrerer Polyisocyanate mit einem 1,3-Dicarbonyl-Blockierungsmittel, ausgewählt aus Diethylmalonat, Dimethylmalonat, Meldrumsäure und Ethylacetoacetat, und einem wärmeaktiven Blockierungsmittel, ausgewählt aus Pyrazolen, wobei ein Hybrid-blockiertes Polyisocyanat mit einem molaren Verhältnis von 1,3-Dicarbonyl-Blockierungsgruppen zu wärmeaktiven Blockierungsgruppen im Bereich von 4:1 bis 1:9 gebildet wird.

15. Verfahren nach Anspruch 14, wobei die 1,3-Dicarbonyl-Blockierungsverbindung Diethylmalonat ist, das wärmeaktive Blockierungsmittel 3,5-Dimethylpyrazol, 3-*iso*-Butyl-5-*tert*-butylpyrazol, 3-*iso*-Butyl-5-methylpyrazol oder 3,5-Di-*tert-*butylpyrazol ist und das molare Verhältnis der Diethylmalonat-Blockierungsgruppe zu der 3,5-Dimethylpyrazol-, 3-*iso*-Butyl-5-*tert*-butylpyrazol-, 3-*iso*-Butyl-5-methylpyrazol- oder 3,5-Di-*tert*-butylpyrazol-Blockierungsgruppe in dem Hybrid-blockierten Polyisocyanat 1:1 beträgt.

16. Verfahren nach Anspruch 14 oder Anspruch 15 zur Herstellung eines Hybrid-blockierten Polyisocyanats nach Anspruch 11 oder 12.

17. Verwendung, Verfahren, Beschichtungszusammensetzung oder industrielles Verfahren nach einem der Ansprüche 1 bis 9, wobei das gemischt-blockierte Polyisocyanat ein nach einem Verfahren einer der Ansprüche 14 bis 16 hergestelltes Hybrid-blockiertes Polyisocyanat ist.

18. Verzweigtes Alkylpyrazol der Formel (IV), 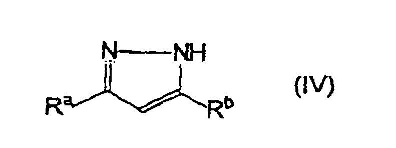
wobei R^{a} ein Alkyl mit 1 bis 6 Kohlenstoffatomen ist und R^{b} ein verzweigtes Alkyl mit 3 bis 6 Kohlenstoffatomen ist, verschieden von Pyrazolen, bei denen eines von R^{a} und R^{b} *tert*-Butyl und das andere Methyl, *iso*-Propyl oder *tert-*Butyl ist.

19. Pyrazol, ausgewählt aus:
3-Methyl-5-*iso*-propylpyrazol,
3-*iso*-Butyl-5-methylpyrazol,
3-*sec*-Butyl-5-methylpyrazol,
3-Ethyl-5-*iso*-propylpyrazol,
3-*iso*-Butyl-5-ethylpyrazol,
3-*sec*-Butyl-5-ethylpyrazol,
3-*tert*-Butyl-5-ethylpyrazol,
3-*iso-*Propyl-5-*n*-propylpyrazol,
3-*iso*-Butyl-5-*n*-propylpyrazol,
3-*sec-*Butyl-5-*n*-propylpyrazol,
3-*tert*-Butyl-5-*n*-propylpyrazol,
3-*n*-Butyl-5-*iso*-propylpyrazol,
3-*iso*-Butyl-5-*n*-butylpyrazol,
3-*n*-Butyl-5-*sec*-butylpyrazol,
3-*n*-Butyl-5-*tert*-butylpyrazol,
3,5-Di-*iso*-propylpyrazol,
3-*iso*-Butyl-5-*iso*-propylpyrazol,
3-*sec*-Butyl-5-*iso*-propylpyrazol,
3,5-Di-*iso*-butylpyrazol,
3-*iso*-Butyl-5-*sec*-butylpyrazol,
3-*iso*-Butyl-5-*tert*-butylpyrazol,
3,5-Di-*sec*-butylpyrazol und
3-*sec*-Butyl-5-*tert*-butylpyrazol.

20. Blockiertes Polyisocyanat, das Blockierungsgruppen, die von einem verzweigten Alkylpyrazol nach Anspruch 18 oder Anspruch 19 abgeleitet sind, aufweist.

21. Blockiertes Polyisocyanat nach Anspruch 20, das femer Blockierungsgruppen, die von einem 1,3-Dicarbonyl-Blockierungsmittel, ausgewählt aus Diethylmalonat, Dimethylmalonat, Meldrumsäure und Ethylacetoacetat, abgeleitet sind, aufweist.

22. Zusammensetzung, umfassend ein blockiertes Polyisocyanat nach einem der Ansprüche 10 bis 12, 20 oder 21 oder hergestellt nach einem der Ansprüche 14 bis 16, und wenigstens eine monofunktionelle oder bifunktionelle Verbindung, die aktiven Wasserstoff enthält.

23. Zusammensetzung nach Anspruch 22, die femer ein Pigment umfasst.

24. Zusammensetzung nach Anspruch 22 oder Anspruch 23, die 0,5 bis 2 blockierte Isocyanatgruppen pro aktiver Wasserstoffgruppe umfasst.

25. Verwendung eines blockierten Polyisocyanats nach einem der Ansprüche 10 bis 12, 20 oder 21 oder hergestellt nach einem der Ansprüche 14 bis 16 in einer klaren Beschichtung, in einer Anstrichfarbe, in einem Elastomer, in einem Klebstoff, in einer Zusammensetzung zum Formen oder zur Oberflächenbehandlung.

26. Verfahren zur Beschichtung eines Substrats, umfassend das Aufbringen einer Zusammensetzung nach einem der Ansprüche 22 bis 24 auf das Substrat und anschließend Erwärmen der aufgebrachten Zusammensetzung, um sie zu vernetzen.

27. Gehärtete Beschichtung, umfassend ein Polymer und freies Pyrazol-Blockierungsmittel, wobei das Polymer als eine Wiederholungseinheit die Einheit der Formel (III) umfasst, 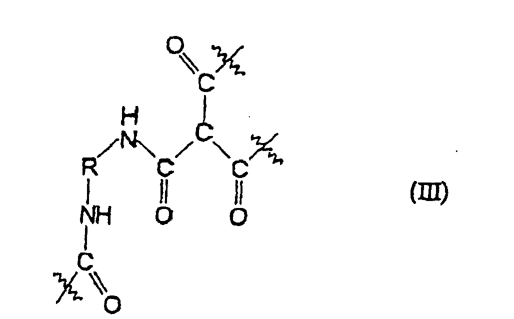
wobei die Einheit 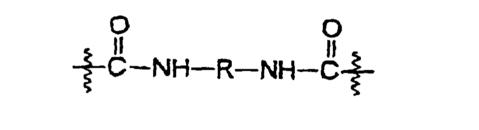 von einem Di- oder höheren lsocyanat abgeleitet ist

28. Gehärtete Zusammensetzung nach Anspruch 27, wobei das freie Pyrazol-Blockierungsmittel 3,5-Dimethylpyrazol, 3-*iso*-Butyl-5-*tert*-butylpyrazol, 3-*iso-*Butyl-5-methylpyrazol oder 3,5-Di-*tert*-butylpyrazol ist.

29. Polymer, erhältlich durch thermisches Entblockieren und Härten einer Beschichtungszusammensetzung, umfassend ein Hybrid-blockiertes Polyisocyanat nach einem der Ansprüche 10 bis 12, 20 oder 21 oder hergestellt nach einem der Ansprüche 14 bis 16, das eine Pyrazol-Blockierungsgruppe aufweist, wobei das Polymer als eine Wiederholungseinheit die Einheit der Formel (III) umfasst, 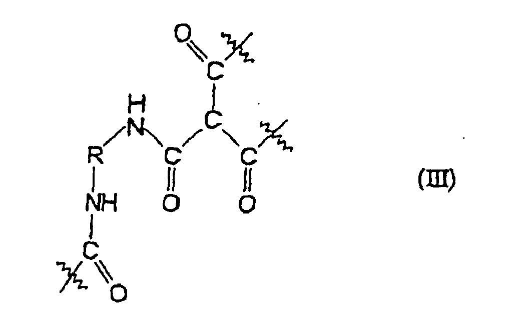
wobei die Einheit 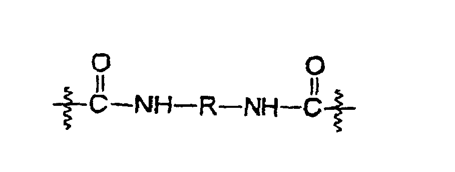 von einem Di- oder höheren Isocyanat abgeleitet ist.

30. Polymer nach Anspruch 29, umfassend ein freies Pyrazol, ausgewählt aus 3,5-Dimethylpyrazol, 3-*iso*-Butyl-5-*tert*-butylpyrazol, 3-*iso*-Butyl-5-methylpyrazol oder 3,5-Di-*tert*-butylpyrazol.
